(19) **Europäisches Patentamt**
**European Patent Office**
**Office européen des brevets**

(11) **EP 4 624 431 A1**

(12) **EUROPEAN PATENT APPLICATION**
published in accordance with Art. 153(4) EPC

(43) Date of publication:
**01.10.2025 Bulletin 2025/40**

(21) Application number: **23894451.6**

(22) Date of filing: **10.11.2023**

(51) International Patent Classification (IPC):
***C03B 5/237*** (2006.01)        ***F23K 5/00*** (2006.01)

(52) Cooperative Patent Classification (CPC):
**C03B 5/237; F23K 5/00**

(86) International application number:
**PCT/JP2023/040616**

(87) International publication number:
**WO 2024/111442 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 JP 2022188270**

(71) Applicant: **AGC INC.**
**Chiyoda-ku,**
**Tokyo 1008405 (JP)**

(72) Inventors:
- **MAEHARA, Terutaka**
  **Tokyo 100-8405 (JP)**
- **TANAKA, Toshiyuki**
  **Tokyo 100-8405 (JP)**
- **OKAMOTO, Mio**
  **Tokyo 100-8405 (JP)**
- **SUZUKI, Yudai**
  **Tokyo 100-8405 (JP)**

(74) Representative: **Müller-Boré & Partner**
**Patentanwälte PartG mbB**
**Friedenheimer Brücke 21**
**80639 München (DE)**

(54) **GLASS MANUFACTURING APPARATUS AND GLASS MANUFACTURING METHOD**

(57)    A glass manufacturing apparatus (1) includes a recuperator (60) configured to heat a heat medium through heat exchange with a combustion gas emitted from a glass melting furnace (10), a first reactor (71) configured to produce $CH_4$ gas and $H_2O$ gas from $CO_2$ gas and $H_2$ gas by performing a methanation reaction, an water vapor controller (73) configured to adjust an $H_2O$ concentration in a product of the first reactor by removing at least a part of the $H_2O$ gas from the product of the first reactor, a second reactor (72) configured to produce CO gas and $H_2$ gas from the product of the first reactor with the $H_2O$ concentration adjusted in the water vapor controller by performing at least one of a dry reforming reaction and a steam reforming reaction through heat exchange with the heat medium heated by the recuperator, and a burner (20) configured to form a flame in the glass melting furnace by burning a oxidizing gas and a flammable gas containing the CO gas and the $H_2$ gas produced by the second reactor.

FIG. 4

## EP 4 624 431 A1

**Description**

TECHNICAL FIELD

The present disclosure relates to a glass manufacturing apparatus and a glass manufacturing method.

BACKGROUND ART

A glass manufacturing apparatus includes a burner that forms a flame inside a glass melting furnace. The burner burns a flammable gas and a oxidizing gas to form a flame. The flammable gas is, for example, natural gas. The natural gas contains $CH_4$ gas as the major component. The oxidizing gas is, for example, pure oxygen gas or air. The flame heats a glass raw material and molten glass obtained by melting the glass raw material.

Air may be used as the oxidizing gas as described above. In this case, because $N_2$ gas, which makes up the majority of the air, does not contribute to combustion, a large amount of air is used and a large amount of combustion gas is emitted from a glass melting furnace. The combustion gas is a gas that remains after a combustion reaction of the flammable gas and the oxidizing gas (including $N_2$ gas that does not contribute to a combustion reaction). A first regenerator and a second regenerator may be provided adjacent to the glass melting furnace so that heat is collected from a large amount of combustion gas that has been emitted.

The first regenerator and the second regenerator are used in combination with first and second burners. A glass manufacturing apparatus alternately and iteratively performs a process in which the first burner forms a flame inside the glass melting furnace and the second burner forms a flame inside the glass melting furnace.

The first regenerator collects heat from the combustion gas emitted from the glass melting furnace while the second burner forms a flame inside the glass melting furnace. The first regenerator releases the collected heat to heat at least one of the flammable gas and the oxidizing gas while the first burner forms a flame inside the glass melting furnace. The first burner burns at least one of the flammable gas and the oxidizing gas heated in the first regenerator to form a flame inside the glass melting furnace.

Likewise, the second regenerator collects heat from the combustion gas emitted from the glass melting furnace while the first burner forms a flame inside the glass melting furnace. The second regenerator releases the collected heat to heat at least one of the flammable gas and the oxidizing gas while the second burner forms a flame inside the glass melting furnace. The second burner burns at least one of the flammable gas and the oxidizing gas heated in the second regenerator to form a flame inside the glass melting furnace.

The first regenerator disclosed in Patent Document 1 releases heat while the first burner forms a flame inside the glass melting furnace, thereby performing an endothermic reaction. As an example of the endothermic reaction, a reaction for producing CO gas and $H_2$ gas from $CH_4$ gas, $H_2O$ gas, and $CO_2$ gas is disclosed. The CO gas and the $H_2$ gas produced in the first regenerator are supplied to the first burner as the flammable gas.

Moreover, pure oxygen gas may be used as the oxidizing gas as described above. In this case, the oxidizing gas does not contain $N_2$ gas. Therefore, because an amount of combustion gas to be emitted is small and the regenerator is not required, a degree of freedom in the design of the glass melting furnace is increased. Moreover, $N_2$ gas, which does not contribute to combustion, is not ineffectively heated and glass can be efficiently heated by combustion heat. Furthermore, the production of $NO_x$ gas can be suppressed.

A recuperator may be used instead of a regenerator as a means for collecting the heat of the combustion gas emitted from the glass melting furnace.

The recuperator of Patent Document 2 heats air through heat exchange with the combustion gas. Air transports heat from the recuperator to a reactor. The reactor heats natural gas through heat exchange with air heated in the recuperator to perform an endothermic reaction for producing $CH_4$ gas from $C_mH_n$ gas contained in the natural gas (m and n are integers of 2 or more).

Patent Document 3 discloses that when an $H_2O$ gas concentration in the furnace atmosphere of the glass melting furnace is excessively high, a moisture concentration contained in the molten glass is excessively high and the glass quality is low (for example, a defect occurs in a bottom surface of the float glass).

Citation List

Patent Document

Patent Document 1: Japanese Patent No. 3705713

Patent Document 2: Japanese Patent No. 6980795

Patent Document 3: Japanese Patent No. 6144622

SUMMARY OF INVENTION

Technical Problem

Natural gas is commonly used as a flammable gas that is burned by a burner. The natural gas mainly contains $CH_4$ gas. When the $CH_4$ gas is burned, $CO_2$ gas is produced and the $CO_2$ gas is emitted. Therefore, a process in which $H_2$ gas is used instead of the $CH_4$ gas so that an amount of $CO_2$ gas to be produced and an amount of $CO_2$ gas to be emitted are reduced is conceived.

When the $H_2$ gas is burned instead of the $CH_4$ gas, the $H_2O$ gas is produced by a reaction between the $H_2$ gas and $O_2$ gas and the $CO_2$ gas is not produced. However, the $H_2O$ gas concentration in the furnace atmosphere is high because $CO_2$ gas is not produced. This is noticeable when pure oxygen gas is used as a oxidizing gas. When the pure oxygen gas is used, the $H_2O$ gas concentration in the furnace atmosphere can theoretically be 100% by volume.

In addition, the glass raw material may emit a gas during melting. For example, when the glass raw material contains a carbonate such as calcium carbonate or magnesium carbonate, the glass raw material releases the $CO_2$ gas during melting. Therefore, the $H_2O$ gas concentration in the furnace atmosphere is actually less than 100% by volume.

When the $H_2O$ gas concentration in the furnace atmosphere is excessively high, NaOH gas derived from Na contained in the molten glass is easily produced and furnace materials such as refractories are easily corroded. Alternatively, when the $H_2O$ gas concentration in the furnace atmosphere is excessively high, the moisture concentration in the molten glass may be excessively high and the glass quality may be low.

An aspect of the present disclosure provides a technique for reducing an $H_2O$ gas concentration in a furnace atmosphere of a glass melting furnace when $H_2$ gas is used as a flammable gas.

Solution to Problem

According to an aspect of the present disclosure, there is provided a glass manufacturing apparatus including: a recuperator configured to heat a heat medium through heat exchange with a combustion gas emitted from a glass melting furnace; a first reactor configured to produce $CH_4$ gas and $H_2O$ gas from $CO_2$ gas and $H_2$ gas by performing a methanation reaction; an water vapor controller configured to adjust an $H_2O$ concentration in a product of the first reactor by removing at least a part of the $H_2O$ gas from the product of the first reactor; a second reactor configured to produce CO gas and $H_2$ gas from the product of the first reactor with the $H_2O$ concentration adjusted in the water vapor controller by performing at least one of a dry reforming reaction and a steam reforming reaction through heat exchange with the heat medium heated by the recuperator; and a burner configured to form a flame in the glass melting furnace by burning a oxidizing gas and a flammable gas containing the CO gas and the $H_2$ gas produced by the second reactor.

Advantageous Effects of Invention

According to the aspect of the present disclosure, when the $H_2$ gas is used as the flammable gas, a transformation is performed to produce at least the CO gas from the $H_2$ gas and the $CO_2$ gas, and the flammable gas containing the produced CO gas and the oxidizing gas are burned by the burner. Thereby, the $H_2O$ gas concentration in the combustion gas can be reduced and the $H_2O$ gas concentration in a furnace atmosphere of the glass melting furnace can be reduced. Moreover, by removing at least the part of the $H_2O$ gas after the methanation reaction and before at least one of the dry reforming reaction and the steam reforming reaction, the $H_2O$ gas concentration in the furnace atmosphere of the glass melting furnace can be further reduced.

BRIEF DESCRIPTION OF DRAWINGS

[FIG. 1] A diagram showing a glass manufacturing apparatus according to a reference embodiment.
[FIG. 2] A diagram showing an example (x = 0.5) of a reaction in which an overall reaction is represented by Eq. (1).
[FIG. 3] A diagram showing Examples 1 to 14 of combinations of a flammable gas, a oxidizing gas, an $H_2O$ gas concentration in a combustion gas, and an $H_2O$ gas concentration in a furnace atmosphere.
[FIG. 4] A diagram showing a first embodiment of a glass manufacturing apparatus including a recuperator and a reactor.

[FIG. 5] A diagram showing a second embodiment of a glass manufacturing apparatus including a recuperator and a reactor.

[FIG. 6] A diagram showing a third embodiment of a glass manufacturing apparatus including a recuperator and a reactor.

[FIG. 7] A diagram showing a fourth embodiment of a glass manufacturing apparatus including a recuperator and a reactor.

[FIG. 8] A diagram showing a fifth embodiment of a glass manufacturing apparatus including a recuperator and a reactor.

[FIG. 9] A diagram showing a sixth embodiment of a glass manufacturing apparatus including a recuperator and a reactor.

[FIG. 10] A diagram showing a first embodiment of a glass manufacturing apparatus including a first regenerator and a second regenerator.

[FIG. 11] A diagram showing a second embodiment of a glass manufacturing apparatus including a first regenerator and a second regenerator.

[FIG. 12] A diagram showing a third embodiment of a glass manufacturing apparatus including a first regenerator and a second regenerator.

[FIG. 13] A diagram showing a fourth embodiment of a glass manufacturing apparatus including a first regenerator and a second regenerator.

[FIG. 14] A diagram showing an example of a condition for suppressing a byproduct of C in the second reactor.

[FIG. 15] A diagram showing an example of an equilibrium composition when a gas mixture of an initial composition shown at point P1 (a = 0.5 and b = 0.5) in FIG. 14 is heated.

[FIG. 16] A diagram showing an example of a relationship of a molar ratio x, a $CH_4$ selectivity, and a temperature in the first reactor.

## DESCRIPTION OF EMBODIMENTS

Hereinafter, embodiments of the present disclosure will be described with reference to the drawings. In each drawing, the same or corresponding constituent elements are denoted by the same reference signs and the description thereof may be omitted. In the description, "to (~)" indicating a numerical range means that numerical values written before and after "to (~)" include a lower limit value and an upper limit value.

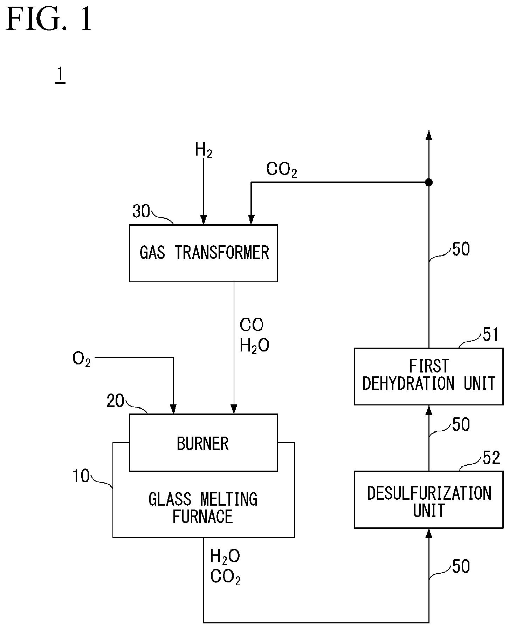

A glass manufacturing apparatus 1 according to a reference embodiment will be described with reference to FIG. 1. The glass manufacturing apparatus 1 includes a glass melting furnace 10. The glass melting furnace 10 houses a glass raw material and molten glass obtained by melting the glass raw material. After the molten glass is removed from the glass melting furnace 10, the molten glass is molded into a desired shape and slowly cooled. Thereby, a glass product is obtained.

The glass raw material is prepared by mixing several types of materials. The glass raw material may contain a fining agent. The glass raw material may include glass cullet to recycle glass. The glass raw material may be a powdered raw material or a granulated raw material obtained by granulating the powdered raw material. The glass raw material is decided in accordance with a composition of the glass product.

The glass melting furnace 10 includes refractories. The refractories include, for example, zirconia-based fused cast refractories, alumina-based fused cast refractories, alumina-zirconia-based fused cast refractories, Al-Zr-Si (AZS)-based fused cast refractories, dense bonded refractories, and the like. The glass melting furnace 10 may include a plurality of types of refractory refractories.

The glass manufacturing apparatus 1 includes a burner 20. The burner 20 forms a flame inside the glass melting furnace 10. The flame heats the glass raw material and the molten glass. The glass raw material is input from above with respect to a surface level of the molten glass and forms a layer on at least a part of the surface level. The glass raw material is gradually fused into the molten glass. Although only one of the burners 20 is shown in FIG. 1, the number of burners 20 is typically two or more.

In addition, the glass manufacturing apparatus 1 may use a plurality of electrodes (not shown) as a heat source. The plurality of electrodes perform a currentcarrying process on the molten glass by applying an alternating current (AC) voltage to the molten glass. In this case, the molten glass is heated. The glass manufacturing apparatus 1 may use an electric heater (not shown) as a heat source. The electric heater itself produces heat. It is only necessary for the glass manufacturing apparatus 1 to include at least the burner 20 as a heat source.

The burner 20 forms a flame by burning a flammable gas and a oxidizing gas. In the present reference embodiment, at least a part of the flammable gas is $H_2$ gas (more specifically, a gas obtained by transforming the $H_2$ gas as will be described below). The use of the $H_2$ gas can reduce the amount of $CO_2$ gas that is produced and the amount of $CO_2$ gas to be emitted compared with the use of $CH_4$ gas.

In addition, it is only necessary for the $H_2$ gas to be used as at least a part of the flammable gas and it is only necessary to use the natural gas in combination therewith. Because the natural gas contains $CH_4$ gas as a main component, an amount of natural gas to be used is more preferably smaller. The amount of natural gas to be used is preferably 0% to 50% by volume, more preferably 0% to 25% by volume, and even more preferably 0% by volume, from the viewpoint of reducing the amount of $CO_2$ gas to be produced.

When the $H_2$ gas is burned instead of the $CH_4$ gas, the $H_2O$ gas is produced by a reaction between the $H_2$ gas and $O_2$ gas, and the $CO_2$ gas is not produced. However, an $H_2O$ gas concentration in the furnace atmosphere is high because the $CO_2$ gas is not produced. This is noticeable when pure oxygen gas is used as the oxidizing gas. When the pure oxygen gas is used, the $H_2O$ gas concentration in the furnace atmosphere can theoretically be 100% by volume.

In addition, the glass raw material may release a gas during melting. For example, if the glass raw material contains a carbonate such as calcium carbonate or magnesium carbonate, the glass raw material releases $CO_2$ gas during melting. Therefore, the $H_2O$ gas concentration in the furnace atmosphere is actually less than 100% by volume.

If the $H_2O$ gas concentration in the furnace atmosphere is excessively high, NaOH gas derived from Na contained in the molten glass is easily produced and furnace materials such as refractories are easily corroded. Alternatively, when the $H_2O$ gas concentration in the furnace atmosphere is excessively high, a moisture concentration in the molten glass may be excessively high and the glass quality may be low.

If air is used instead of pure oxygen gas as the oxidizing gas, the $H_2O$ gas concentration in the furnace atmosphere can be reduced. In this case, because the $N_2$ gas, which makes up the majority of the air, does not contribute to combustion, a large amount of air is used and a large amount of combustion gas is emitted from the glass melting furnace. The combustion gas is a gas that remains after a combustion reaction of the flammable gas and the oxidizing gas (including the $N_2$ gas that does not contribute to combustion). To collect the heat of the large amount of combustion gas that has been emitted, a regenerator is provided adjacent to the glass melting furnace 10.

On the other hand, if the pure oxygen gas is used as the oxidizing gas, the oxidizing gas does not contain $N_2$ gas. Therefore, because an amount of combustion gas to be emitted is small and the regenerator is not required, the degree of freedom in the design of the glass melting furnace 10 is increased. Moreover, the $N_2$ gas, which does not contribute to combustion, is not ineffectively heated and glass can be efficiently heated by combustion heat. Furthermore, the production of $NO_x$ gas can be suppressed.

However, if the pure oxygen gas is used as the oxidizing gas, an $H_2O$ gas concentration in the furnace atmosphere is higher than when air is used. When oxygen-enriched air is used instead of pure oxygen gas as the oxidizing gas, the $H_2O$ gas concentration is higher than when air is used. The oxygen-enriched air is a gas mixture of pure oxygen gas and air and is a gas having a higher oxygen gas concentration than air.

The glass manufacturing apparatus 1 of the present reference embodiment includes a gas transformer 30 that transforms the $H_2$ gas to reduce the $H_2O$ gas concentration in the furnace atmosphere. One or more gas transformers 30 (one gas transformer 30 in FIG. 1) are provided. The gas transformer 30 produces at least the CO gas and the $H_2O$ gas from the $CO_2$ gas and the $H_2$ gas according to a reaction in which an overall reaction is represented by the following Eq. (1) or (2). The $CO_2$ gas and the $H_2$ gas are reactants and the CO gas and the $H_2O$ gas are products. The product may further include at least one of the $H_2$ gas and the $CO_2$ gas.

[Chem. 1]

$$xCO_2 + H_2 \rightarrow xCO + (1 - x)H_2 + xH_2O \ (0 < x \le 1) \cdots \qquad (1)$$

[Chem. 2]

$$xCO_2 + H_2 \rightarrow (x - 1)CO_2 + CO + H_2O \ ( 1 < x) \cdots \qquad (2)$$

In Eqs. (1) and (2), x denotes a molar ratio of the $CO_2$ gas to the $H_2$ gas supplied to the gas transformer 30. The molar ratio x is greater than 0.00. In general, the molar ratio is consistent with a volume ratio.

In addition, it is only necessary for the gas transformer 30 to perform a reaction in which the overall reaction is represented by Eq. (1) or Eq. (2) and this reaction may be simultaneously performed with a reaction different therefrom. Thus, it is only necessary to supply the $CO_2$ gas and the $H_2$ gas as the reactants to the gas transformer 30, and other gases may be further supplied.

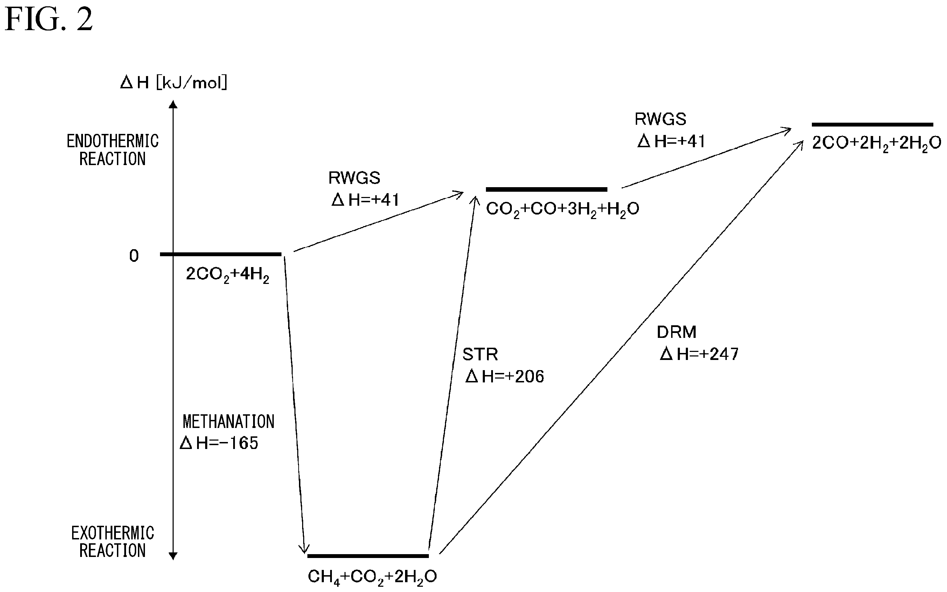

In FIG. 2, an example (x = 0.5) of a reaction in which the overall reaction is given by Eq. (1) is shown. In FIG. 2, ΔH is a variation in enthalpy (kJ/mol). The enthalpy is also referred to as heat content. As can be seen from FIG. 2, the reaction in which the overall reaction is represented by Eq. (1) or (2) is an endothermic reaction. The product of the endothermic reaction (the CO gas) potentially contains more heat than the reactant of the endothermic reaction (the $H_2$ gas).

Reactions in which the overall reaction is represented by Eq. (1) or (2) include, for example, at least one of (A) a reverse shift (a reverse water gas shift: RWGS) reaction, (B) a combination of a methanation reaction and a dry reforming (DRM) reaction, and (C) a combination of a methanation reaction and a steam reforming (STR) reaction.

Compared to the above-described (B) and (C), the above-described (A) can reduce the number of reactions used and simplify the apparatus configuration. On the other hand, the above-described (B) and (C) can lower the reaction temperature compared to the above-described (A). Incidentally, the reverse shift reaction is represented by the following Eq. (3). The methanation reaction is represented by the following Eq. (4). The DRM reaction is represented by the following Eq. (5). In addition, the STR reaction is represented by the following Eq. (6).

[Chem. 3]

$$CO_2 + H_2 + 41.2[kJ/mol] \rightarrow CO + H_2O \cdots \quad (3)$$

[Chem. 4]

$$CO_2 + 4H_2 \rightarrow CH_4 + 2H_2O + 165.0[kJ/mol] \cdots \quad (4)$$

[Chem. 5]

$$CH_4 + CO_2 + 247.3[kJ/mol] \rightarrow 2CO + 2H_2 \cdots \quad (5)$$

[Chem. 6]

$$CH_4 + H_2O + 206.2[kJ/mol] \rightarrow CO + 3H_2 \cdots \quad (6)$$

From Eq. (3), it can be seen that the reverse shift reaction is an endothermic reaction. From Eq. (4), it can be seen that the methanation reaction is an exothermic reaction. From Eq. (5), it can be seen that the DRM reaction is the endothermic reaction. From Eq. (6), it can be seen that the STR reaction is the endothermic reaction. The product of the endothermic reaction (the CO gas) potentially contains more heat than the reactant of the endothermic reaction (the $H_2$ gas or the $CH_4$ gas). Therefore, the combustion of the product of the endothermic reaction (the CO gas) yields more combustion heat than the combustion of the reactant of the endothermic reaction (the $H_2$ gas or the $CH_4$ gas).

The gas transformer 30 supplies a product such as the CO gas to the burner 20. The gas to be supplied includes, for example, the CO gas and the $H_2O$ gas (see Eqs. (1) and (2)). The gas to be supplied may further include at least one of the $H_2$ gas and the $CO_2$ gas.

The burner 20 forms a flame inside the glass melting furnace 10 by burning a flammable gas containing the CO gas produced by the gas transformer 30 and a oxidizing gas. The combustion of the CO gas improves the heat of combustion per mole more than the combustion of the $H_2$ gas.

The combustion reaction of the CO gas is represented by the following Eq. (7) and the combustion reaction of the $H_2$ gas is represented by the following Eq. (8). Here, a lower heating value is used for the heat of combustion of the $H_2$ gas.

[Chem. 7]

$$CO + \frac{1}{2}O_2 \rightarrow CO_2 + 282.2[kJ/mol] \quad \cdots (7)$$

[Chem. 8]

$$H_2 + \frac{1}{2}O_2 \rightarrow H_2O + 241.9[kJ/mol] \quad \cdots (8)$$

From Eqs. (7) and (8), it can be seen that combustion of the CO gas can improve the heat of combustion per mole more than the combustion of the $H_2$ gas.

The combustion reaction of the flammable gas and the oxidizing gas by the burner 20 is represented by, for example, the following Eq. (9) or (10).

[Chem. 9]

$$xCO + (1-x)H_2 + xH_2O + \frac{1}{2}O_2$$
$$\rightarrow xCO_2 + H_2O \quad (0 < x \leq 1) \quad \cdots (9)$$

[Chem. 10]

$$(x - 1)CO_2 + CO + H_2O + \frac{1}{2}O_2$$
$$\rightarrow xCO_2 + H_2O \quad (1 < x) \quad \cdots (10)$$

Eq. (9) represents the combustion reaction of the product obtained in Eq. (1). On the other hand, Eq. (10) shows the combustion reaction of the product obtained in Eq. (2). In Eqs. (9) and (10), x denotes a molar ratio of the $CO_2$ gas to the $H_2$ gas supplied to the gas transformer 30. The molar ratio x is greater than 0.00.

In addition, the combustion reaction of the flammable gas and the oxidizing gas may include at least the combustion reaction represented by Eqs. (9) and (10) and may further include another combustion reaction.

As described above, the burner 20 burns the flammable gas containing the CO gas produced by the gas transformer 30 and the oxidizing gas. Therefore, the combustion gas includes the $CO_2$ gas as well as the $H_2O$ gas. This is also obvious from Eq. (9) and Eq. (10). The $H_2O$ gas can be diluted with the $CO_2$ gas and the $H_2O$ gas concentration in the furnace atmosphere can be reduced.

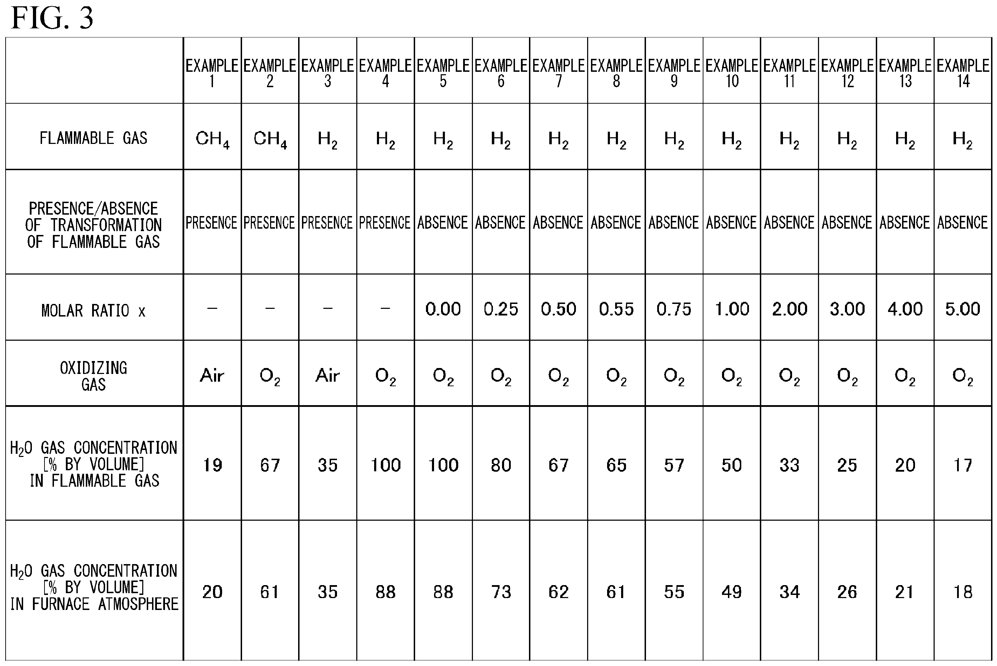

Examples 1 to 14 of combinations of the flammable gas, the oxidizing gas, the $H_2O$ gas concentration in the combustion gas, and the $H_2O$ gas concentration in the furnace atmosphere are shown in FIG. 3. The furnace atmosphere includes a gas released by the glass raw material when the glass raw material is fused, in addition to the combustion gas. Therefore, the $H_2O$ gas concentration in the furnace atmosphere is lower than the $H_2O$ gas concentration in the combustion gas. The $H_2O$ gas concentration in the combustion gas shown in FIG. 3 is a numerical value of a case where the gas transformer 30 does not have the water vapor controller 73 to be described below. When the gas transformer 30 has the water vapor controller 73, the $H_2O$ gas concentration in the combustion gas is less than the numerical value shown in FIG. 3.

As shown in FIG. 3, if the $H_2$ gas is used instead of the $CH_4$ gas as the flammable gas, the $H_2O$ gas concentration in the furnace atmosphere is high because the $CO_2$ gas is not produced. This is noticeable when pure oxygen gas is used as the oxidizing gas.

In addition, the $H_2O$ gas concentration in the furnace atmosphere depends on a type of glass raw material, but is mainly determined in accordance with a type of flammable gas and a type of oxidizing gas. Therefore, in the present reference embodiment, the $H_2O$ gas concentration in the combustion gas is adopted as a parameter to be managed.

The $H_2O$ gas concentration in the combustion gas is preferably 67% or less by volume. Molten glass has been conventionally manufactured by burning the $CH_4$ gas and the $O_2$ gas (pure oxygen gas). It has been confirmed that if the $H_2O$ gas concentration in the combustion gas is 67% or less by volume, there is no problem with the quality of the glass product or corrosion of the furnace material.

Preferably, the molar ratio x is 0.50 or more so that the $H_2O$ gas concentration in the combustion gas is 67% or less by volume (see FIG. 3). The $H_2O$ gas concentration in the combustion gas is more preferably 65% or less by volume. More preferably, the molar ratio x is 0.55 or more so that the $H_2O$ gas concentration in the combustion gas is 65% or less by volume (see FIG. 3).

Although a lower limit of the $H_2O$ gas concentration in the combustion gas is not particularly limited, the concentration is preferably 20% or more by volume from the viewpoint of feasibility. Preferably, the molar ratio x is 4.00 or less so that the $H_2O$ gas concentration in the combustion gas is 20% or more by volume (see FIG. 3).

More preferably, the molar ratio x is less than or equal to 1.00. If the molar ratio x is 1.00 or less, the combustion reaction is represented by Eq. (9). On the other hand, when the molar ratio x exceeds 1.00, the combustion reaction is represented by Eq. (10). As can be seen from Eq. (10), there is $CO_2$ gas of (x-1) moles which does not contribute to combustion when the molar ratio x exceeds 1.00. This $CO_2$ gas not only does not produce combustion heat but also consumes combustion heat ineffectively. If the molar ratio x is 1.00 or less, $CO_2$ gas of (x-1) moles which does not contribute to combustion will not be ineffectively heated and the glass will be heated efficiently with combustion heat.

Although a dedicated supply source such as a gas cylinder (not shown) may be used to supply the $CO_2$ gas to the gas transformer 30, a circulation line 50 is used in the present reference embodiment. The circulation line 50 supplies at least a part of the $CO_2$ gas contained in the combustion gas from the glass melting furnace 10 to the gas transformer 30. At least a part of the $CO_2$ gas emitted from the glass melting furnace 10 can be used as a reactant in the overall reaction. The $CO_2$ gas can be circulated and the amount of $CO_2$ gas to be emitted can be reduced.

A first dehydration unit 51 may be provided along the circulation line 50. The first dehydration unit 51 separates the $H_2O$ gas and the $CO_2$ gas from each other by removing the $H_2O$ gas from the combustion gas. At least a part of the separated $CO_2$ gas can be used as a reactant in the overall reaction. The $H_2O$ gas supply to the gas transformer 30 can be limited, and the $H_2O$ gas concentration in the furnace atmosphere of the glass melting furnace 10 can be reduced. The first dehydration unit 51 may remove at least a part of the $H_2O$ gas, but substantially all of the $H_2O$ gas is removed in the present reference embodiment.

The glass manufacturing apparatus 1 preferably collects heat from the combustion gas burned by the burner 20 and uses the collected heat to perform the reaction in which the overall reaction is represented by Eq. (1) or (2). By collecting heat from the burned combustion gas, the waste of energy can be reduced. As a heat collection means, a recuperator or a regenerator to be described below is used. Hereinafter, the heat collection means and the like will be described.

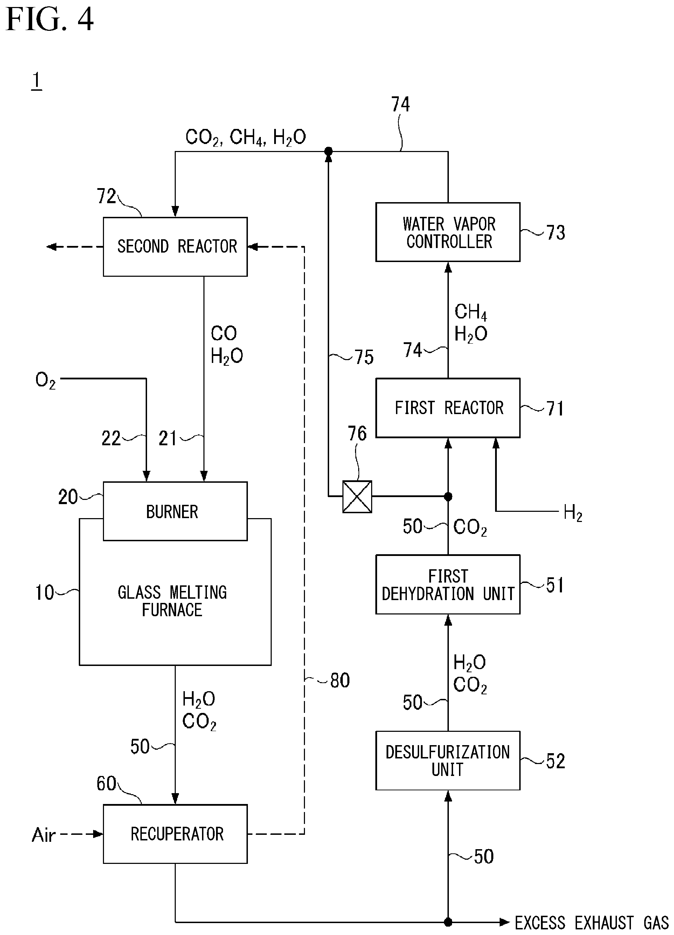

A first embodiment of the glass manufacturing apparatus 1 including a recuperator 60 will be described with reference to FIG. 4. The glass manufacturing apparatus 1 includes a glass melting furnace 10, a burner 20, the recuperator 60, a first reactor 71, and a second reactor 72. The gas transformer 30 includes the first reactor 71, the second reactor 72, and the like (including an water vapor controller 73 and an additive line 75 to be described below). The first reactor 71 performs the methanation reaction and the second reactor 72 performs at least one of the DRM and STR reactions. Hereinafter, differences from the glass manufacturing apparatus 1 shown in FIG. 1 will be mainly described.

The recuperator 60 heats a heat medium through heat exchange with a combustion gas emitted from the glass melting furnace 10. Although the heat medium may be a gas or a liquid, the heat medium is preferably a gas from the viewpoint of preventing boiling because the temperature of the combustion gas is high. The heat medium is preferably air. The recuperator 60 transfers heat between the combustion gases and the heat medium (e.g., air) without mixing them. The recuperator 60 is provided outside the glass melting furnace 10 in FIG. 4, but may be provided inside the glass melting furnace 10. One or more recuperators 60 (one recuperator 60 in FIG. 4) are provided. The recuperator 60 is thermally connected to the second reactor 72 via a first heat transport line 80. The first heat transport line 80 transports the heat medium from the recuperator 60 to the second reactor 72.

The first reactor 71 produces $CH_4$ and $H_2O$ gases from $CO_2$ and $H_2$ gases by performing a methanation reaction. The $CO_2$ and $H_2$ gases are reactants and the $CH_4$ and $H_2O$ gases are products (see Eq. (4)). The methanation reaction is sufficiently performed even at a low temperature of 400°C or lower.

The second reactor 72 produces CO gas from the product of the first reactor 71 by performing at least one of the DRM and STR reactions through heat exchange with a heat medium heated in the recuperator 60. When both the DRM and STR reactions occur, the $CH_4$ and $H_2O$ gases and the $CO_2$ gas are reactants and the CO and $H_2$ gases are products (see Eqs. (5) and (6)). The product may include at least one of gases such as the $H_2O$ gas, the $CO_2$ gas, and the $CH_4$ gas other than the CO gas and the $H_2$ gas. The second reactor 72 does not mix the reactant and product of the second reactor 72 with a heat medium (e.g., air) and transfers heat therebetween.

Because the DRM reaction and the STR reaction are endothermic reactions, heat can be efficiently collected from the heat medium and heat collected from the combustion gas can be used efficiently. The product of the endothermic reaction (the CO gas) also potentially contains more heat than the reactant of the endothermic reaction (the $H_2$ gas). Therefore, the combustion of the CO gas can improve the heat of combustion per mole more than the combustion of the $H_2$ gas (see Eqs. (7) and (8)).

It is only necessary for the reaction occurring in the second reactor 72 to be an endothermic reaction as a whole. The reaction occurring in the second reactor 72 may include a reaction other than the DRM reaction and the STR reaction. Therefore, in the second reactor 72, the reactant and product are not particularly limited. The product produced in the second reactor 72 (i.e., the flammable gas) is supplied to the burner 20 via the first supply line 21. On the other hand, the oxidizing gas is supplied to the burner 20 via the second supply line 22.

The glass manufacturing apparatus 1 includes an water vapor controller 73. The water vapor controller 73 is provided along a connection line 74 connecting the first reactor 71 and the second reactor 72. The water vapor controller 73 adjusts an $H_2O$ concentration in the product of the first reactor 71 by removing at least a part of the $H_2O$ gas from the product of the first reactor 71. The water vapor controller 73 is removed, for example, by cooling and liquefying the $H_2O$ gas. The second reactor 72 produces the CO gas from the product of the first reactor 71 in which the $H_2O$ concentration is adjusted in the water vapor controller 73.

In the present embodiment, the water vapor controller 73 removes at least a part of the $H_2O$ gas from the product of the first reactor 71 and delivers the product of the first reactor 71 to the second reactor 72. The $H_2O$ concentration in the product of the second reactor 72 can be reduced and the $H_2O$ concentration in the furnace atmosphere of the glass melting furnace 10 can be reduced.

A process of removing at least a part of the $H_2O$ gas from the product of the first reactor 71 and delivering the product of the first reactor 71 to the second reactor 72 is also effective in performing the overall reaction represented by Eq. (1) or (2). This is evident from the fact that $H_2O$ does not appear as the substance (reactant) on the left side of the general reaction equation, but is present as the substance (product) on the right side of the general reaction equation. By performing the above-described overall reaction and the endothermic reaction, the heat collection rate can be improved.

Preferably, the amount of $H_2O$ gas removed in the water vapor controller 73 is set so that C is not produced as a byproduct in the second reactor 72 (or so that soot is not deposited). The second reactor 72 performs at least one of the DRM reaction (see Eq. (5)) and the STR reaction (see Eq. (6)) as described above to produce the CO and $H_2$ gases from at least one of the $H_2O$ and $CO_2$ gases and the $CH_4$ gas.

As can be seen from Eqs. (5) and (6), if the total number of moles of the $H_2O$ and $CO_2$ gases is less than the number of moles of the $CH_4$ gas, the $CH_4$ gas remains. If the $CH_4$ gas remains, because the reaction temperature in the second reactor 72 is 700°C or higher, C will be produced as a byproduct according to pyrolysis of the $CH_4$ gas. Thus, it is preferable to set the amount of $H_2O$ gas removal in the water vapor controller 73 so that soot is not deposited.

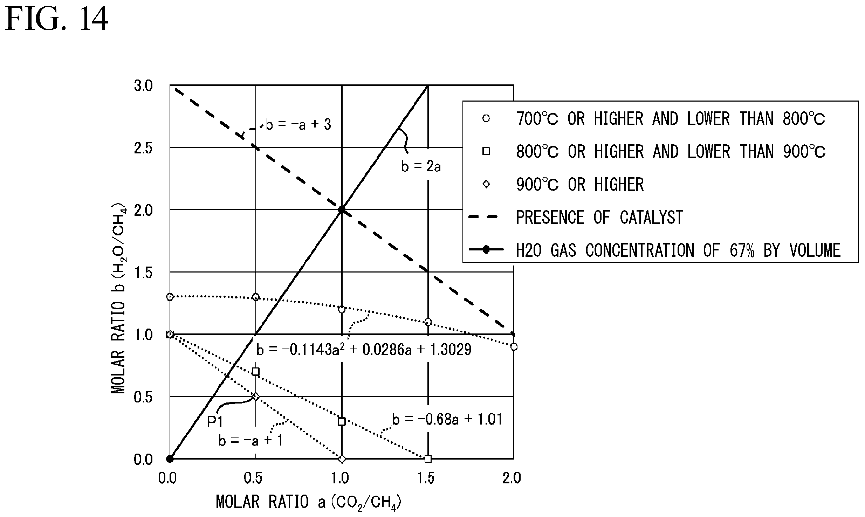

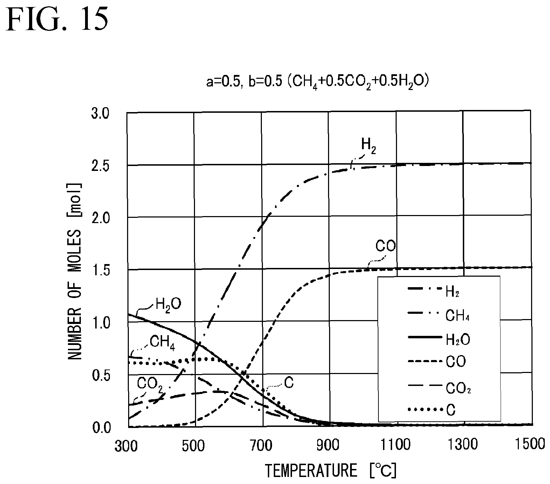

Next, the amount of $H_2O$ gas removed in the water vapor controller 73 will be described with reference to FIGS. 14 and 15. In FIGS. 14 and 15, a denotes a molar ratio ($CO_2/CH_4$) of the $CO_2$ gas supplied to the second reactor 72 to the $CH_4$ gas supplied to the second reactor 72 and b denotes a molar ratio ($H_2O/CH_4$) of the $H_2O$ gas supplied to the second reactor 72 to the $CH_4$ gas supplied to the second reactor 72.

In order to prevent the byproduct of C in the second reactor 72, the water vapor controller 73 preferably removes only a part of the $H_2O$ gas from the product of the first reactor 71 so that the following Inequality (a1) is valid when a reaction temperature in the second reactor 72 is 900°C or higher (preferably 1600°C or lower), the following Inequality (a2) is valid when the reaction temperature is 800°C or higher and lower than 900°C, and the following Inequality (a3) is valid when the reaction temperature is 700°C or higher and lower than 800°C.

$$b \geq -a+1 \,...(a1)$$

$$b \geq -0.68a+1.01 \,...(a2)$$

$$b \geq -0.1143a^2+0.0286a+1.3029 \,...(a3)$$

Here, the condition for preventing the byproduction of C in the second reactor 72 was obtained by calculating the equilibrium composition at atmospheric pressure at each temperature with a gas mixture in which $CH_4$ gas of 1 mole, $CO_2$ gas of a moles, and $H_2O$ gas of b moles are mixed as the initial composition. The equilibrium composition was calculated using the thermodynamic equilibrium calculation software (a software name of FactSage developed by GTT-Technologies).

In FIG. 15, an example of an equilibrium composition when a gas mixture of an initial composition shown at point P1 (a = 0.5 and b = 0.5) in FIG. 14 is heated is shown. As can be seen from FIG. 15, when the initial composition is (a = 0.5 and b = 0.5), the byproduct of C can be prevented if the temperature is 900°C or higher. As can be seen from FIG. 15, if a and b are constant, the byproduct of C is more easily suppressed when the temperature is higher.

The inventors of the present invention have derived the above Inequalities (a1), (a2), and (a3) by calculating the minimum temperature required to prevent the byproduct of C using a and b as variables. In addition, when Inequality (a1) is valid, it indicates that the sum of a and b is 1 or more and indicates that the total number of moles of the $H_2O$ and $CO_2$ gases is greater than or equal to the number of moles of the $CH_4$ gas. When the above Inequality (a1) is not valid, the total number of moles of the $H_2O$ gas and the $CO_2$ gas is less than the number of moles of the $CH_4$ gas, and the excess of the $CH_4$ gas results in the byproduct of C even when the reaction temperature is high.

More preferably, the water vapor controller 73 removes only a part of the $H_2O$ gas from the product of the first reactor 71 so that the following Inequality (a4) is valid in addition to any one of the above Inequalities (a1), (a2), and (a3).

$$b \leq 2a \,...(a4)$$

If the above Inequality (a4) is valid, an $H_2O$ gas concentration in the combustion gas of the burner 20 is 67% or less by volume. It has been confirmed that if the $H_2O$ gas concentration in the combustion gas is 67% or less by volume, there is no problem with the quality of the glass product or corrosion of the furnace material.

Moreover, more preferably, the water vapor controller 73 removes only a part of the $H_2O$ gas from the product of the first reactor 71 so that the following Inequality (a5) is valid in addition to any one of the above Inequalities (a1), (a2), and (a3).

$$b \geq -a+3 \,...(a5)$$

If the above Inequality (a5) is valid, a coking reaction in the surface of the metal catalyst can be suppressed when the second reactor 72 has the metal catalyst. The coking reaction is a reaction in which soot is deposited in a kinetically favorable side reaction, even under equilibrium conditions in which soot is not deposited. If soot covers the surface of the metal catalyst, the activity of the metal catalyst is reduced.

In addition, when the second reactor 72 does not have a metal catalyst, the above Inequality (a5) may or may not be valid. When the second reactor 72 does not have a metal catalyst, the following Inequality (a6) may be valid instead of the above Inequality (a5).

## EP 4 624 431 A1

$$b < -a + 3 \ \ldots (a6).$$

If the above Inequality (a6) is valid, the amount of $H_2O$ gas removal in the water vapor controller 73 is large and the $H_2O$ gas concentration in the combustion gas is low.

The glass manufacturing apparatus 1 preferably includes an additive line 75. The additive line 75 supplies at least a part of the $CO_2$ gas for use in the DRM reaction to the second reactor 72 without passing through the first reactor 71. Thereby, it is possible to reduce a molar ratio x in the first reactor 71 and suppress the deposition of soot in the first reactor 71.

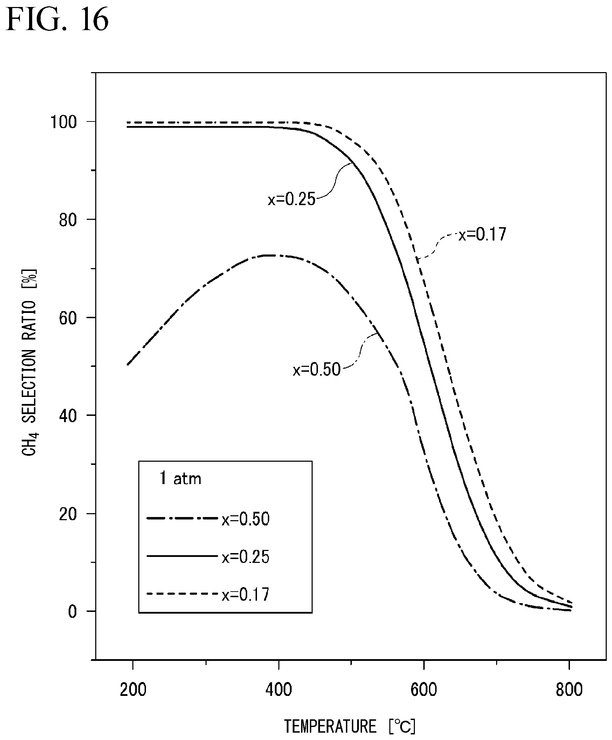

Next, an example of a relationship of the molar ratio x, the $CH_4$ selectivity, and the temperature in the first reactor 71 will be described with reference to FIG. 16. The molar ratio x is a molar ratio of the $CO_2$ gas to the $H_2$ gas as described above. The $CH_4$ selectivity is a ratio of an amount of $CH_4$ gas production to a total amount of product production in a methanation reaction (a reaction in which the $CH_4$ gas and the $H_2O$ gas are produced from the $CO_2$ gas and the $H_2$ gas).

As shown in FIG. 16, the $CH_4$ selectivity is low if the temperature exceeds 500°C. When the temperature exceeds 500°C, the $CH_4$ gas is expected to decompose. Accordingly, the temperature of the first reactor 71 is preferably 500°C or lower, and more preferably 400°C or lower. The methanation reaction is sufficiently performed even at a temperature of 400°C or lower.

Moreover, as shown in FIG. 16, when the molar ratio x is greater than 0.25, the $CH_4$ rselectivity is low. It is considered that if the molar ratio x exceeds 0.25, carbon is precipitated (or soot is deposited). Accordingly, it is preferable to have a molar ratio x of 0.25 or less in at least the first reactor 71 so that the deposition of soot in the first reactor 71 is suppressed.

In addition, the molar ratio x in the gas transformer 30, which includes the first reactor 71, the second reactor 72, and the like, may exceed 0.25. It is only necessary for the molar ratio x in the first reactor 71 to be 0.25 or less.

$CO_2$ gas is used in both the methanation reaction and the DRM reaction. Thus, although it is necessary to supply the $CO_2$ gas to the first reactor 71, it is not necessary to supply the $CO_2$ gas for use in both the first reactor 71 and the second reactor 72 to the first reactor 71.

The additive line 75 supplies at least a part of the $CO_2$ gas for use in the second reactor 72 to the second reactor 72 without passing through the first reactor 71 so that the deposition of soot in the first reactor 71 is suppressed as described above. Thereby, it is possible to reduce the molar ratio x in the first reactor 71 and suppress the deposition of soot in the first reactor 71.

The additive line 75 branches from the circulation line 50, which will be discussed below, for example, to bypass the first reactor 71 and join the connection line 74. The additive line 75 may bypass not only the first reactor 71 but also the water vapor controller 73. Cooling of the $CO_2$ gas can be suppressed by the water vapor controller 73. A flow rate controller 76 may be provided along the additive line 75.

Although the additive line 75 joins a connection line 74, the additive line 75 may be connected to the second reactor 72 without joining the connection line 74. In the former case, the product of the first reactor 71 and the $CO_2$ gas are premixed and supplied to the second reactor 72. In the latter case, the product of the first reactor 71 and the $CO_2$ gas are separately supplied to the second reactor 72.

The glass manufacturing apparatus 1 preferably includes a circulation line 50. The circulation line 50 supplies at least a part of the $CO_2$ gas contained in the combustion gas burned by the burner 20 from the glass melting furnace 10 to the first reactor 71. At least a part of the $CO_2$ gas emitted from the glass melting furnace 10 can be used as a reactant in the methanation reaction. The $CO_2$ gas can be circulated and an amount of $CO_2$ gas to be emitted can be reduced. At least a part of the $CO_2$ gas emitted from the glass melting furnace 10 can also be used as a reactant in the DRM or STR reaction.

The glass manufacturing apparatus 1 may include a first dehydration unit 51 along the circulation line 50. The first dehydration unit 51 separates the $H_2O$ gas from the $CO_2$ gas by removing the $H_2O$ gas from the combustion gas. It is possible to restrict the circulation of the $H_2O$ gas while permitting the circulation of $CO_2$ gas. The $H_2O$ gas not only does not produce heat of combustion but also ineffectively consumes heat of combustion. If the circulation of $H_2O$ gas can be restricted, the non-flammable $H_2O$ gas can be avoided, and the heat of combustion can be used to heat glass efficiently. If the circulation of $H_2O$ gas can be restricted, the concentration of $H_2O$ gas in the furnace atmosphere can be reduced.

Although it is only necessary for the first dehydration unit 51 to remove at least a part of the $H_2O$ gas, substantially all of the $H_2O$ gas is removed in the present embodiment. When only a part of the $H_2O$ gas is removed from the first dehydration unit 51 or when there is no first dehydration unit 51 as described below, the gas containing the $H_2O$ gas is supplied to the first reactor 71.

More preferably, a desulfurization unit 52 is provided along the circulation line 50. The desulfurization unit 52 removes a sulfur-containing gas from the combustion gas. The sulfur contained in the sulfur-containing gas is derived from a glass raw material, for example, a fining agent. The supply of the sulfur-containing gas to the first reactor 71 can be restricted by providing the desulfurization unit 52 along the circulation line 50. Thereby, the first reactor 71 can be maintained in a clean state.

Because the second reactor 72 uses a heat medium to collect heat from the combustion gas unlike a regenerator to be described below, it is possible to restrict a process in which the combustion gas flows into the second reactor 72 as it is and it is possible to maintain the second reactor 72 in a clean state. Therefore, when the second reactor 72 has a metal catalyst, the deterioration of the metal catalyst can be suppressed.

The second reactor 72 may have a metal catalyst. The metal catalyst promotes at least one of the DRM reaction and the STR reaction. The metal catalyst can increase a reaction rate of at least one of the DRM reaction and the STR reaction and cause the reaction to equilibrate in a short time. The metal catalyst may also reduce a volume of the second reactor 72 by increasing the reaction rate. As a metal catalyst, copper (Cu), nickel (Ni), or the like is used. If the reaction rate is sufficiently fast, the metal catalyst may be eliminated.

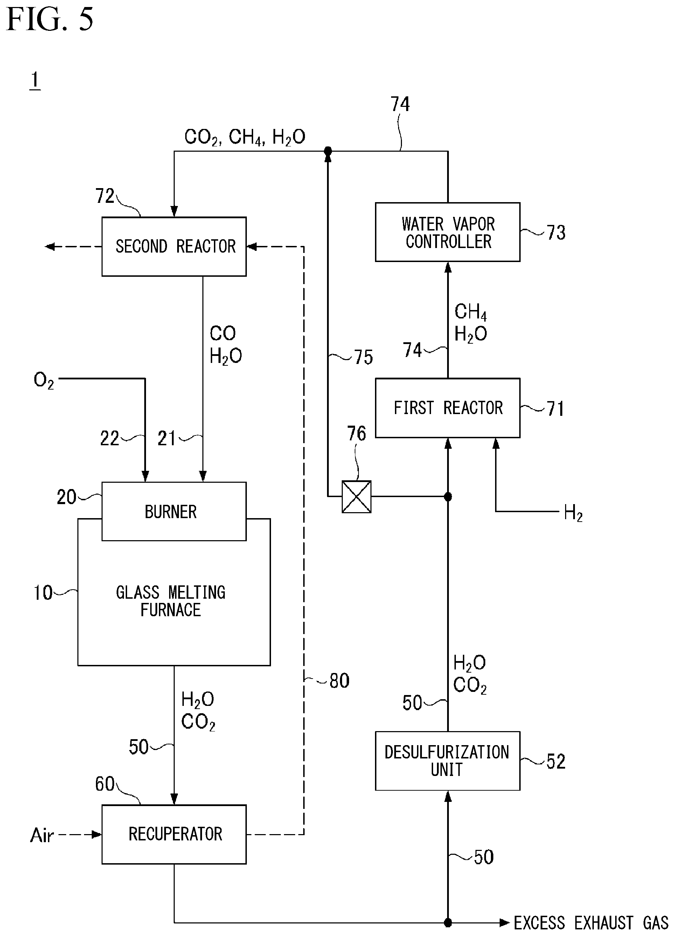

A second embodiment of a glass manufacturing apparatus 1 including a recuperator 60 will be described with reference to FIG. 5. Hereinafter, differences from the glass manufacturing apparatus 1 shown in FIG. 4 will be mainly described. As shown in FIG. 5, the glass manufacturing apparatus 1 may not include the first dehydration unit 51 (see FIG. 4). An water vapor controller 73 may also serve as the first dehydration unit 51.

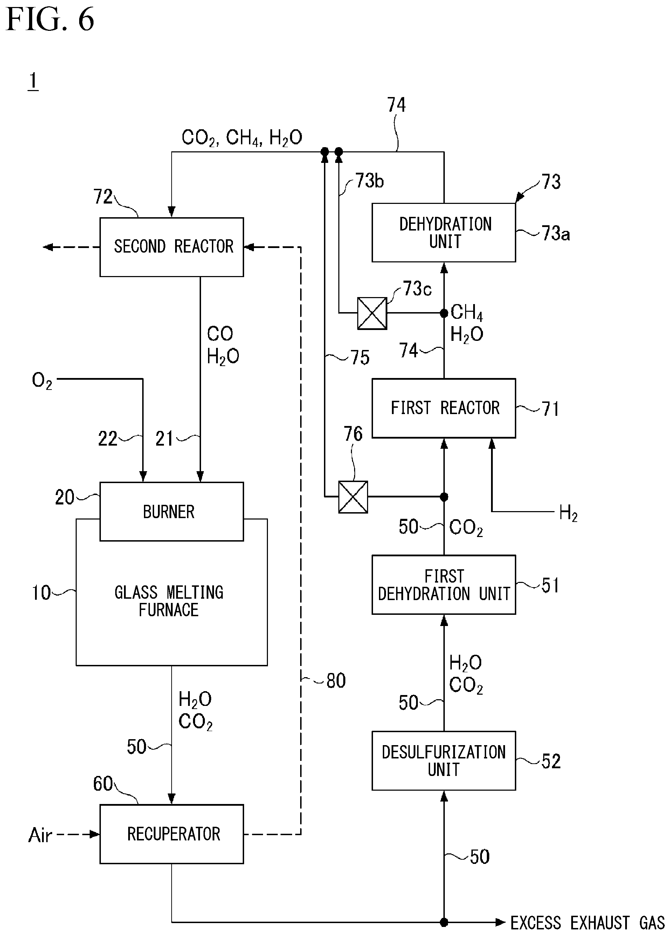

A third embodiment of a glass manufacturing apparatus 1 including a recuperator 60 will be described with reference to FIG. 6. Hereinafter, differences from the glass manufacturing apparatus 1 shown in FIG. 4 will be mainly described. As shown in FIG. 6, the water vapor controller 73 may include a dehydration unit 73a in which a part of $H_2O$ gas is removed by cooling and liquefying and a bypass line 73b along which the remaining part of the $H_2O$ gas is delivered from a first reactor 71 to a second reactor 72.

According to the present embodiment, all unnecessary $H_2O$ gas can be removed in the dehydration unit 73a while the $H_2O$ gas for use in the STR reaction remains. Moreover, the $H_2O$ gas for use in the STR reaction can also be delivered from the first reactor 71 to the second reactor 72 without cooling in the dehydration unit 73a. The bypass line 73b bypasses the dehydration unit 73a. A flow rate controller 73c may be provided along the bypass line 73b.

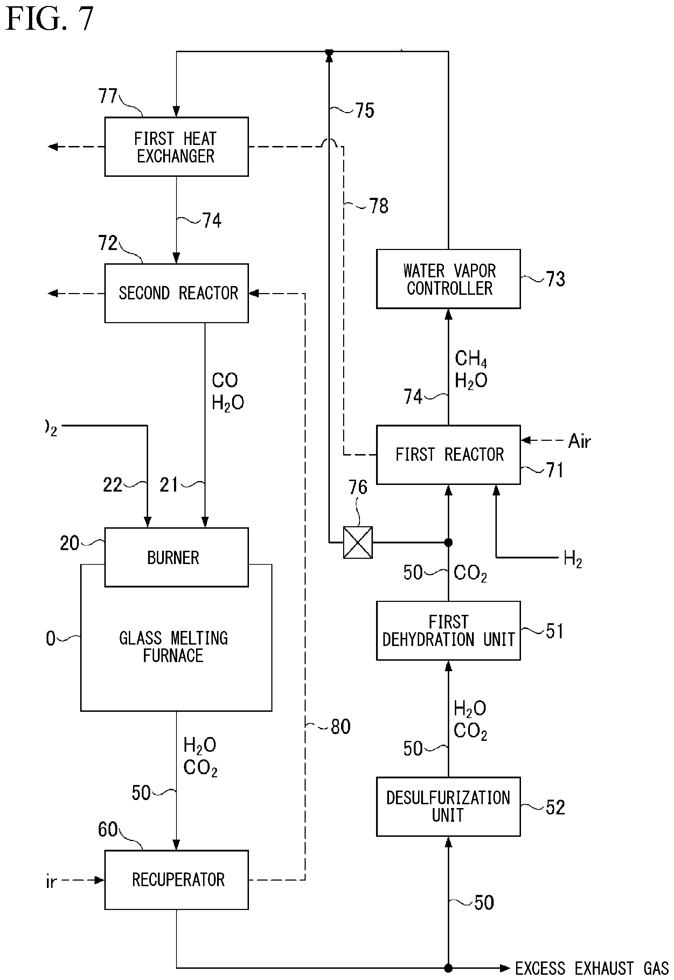

A fourth embodiment of a glass manufacturing apparatus 1 including a recuperator 60 will be described with reference to FIG. 7. Hereinafter, differences from the glass manufacturing apparatus 1 shown in FIG. 4 will be mainly described. As shown in FIG. 7, the glass manufacturing apparatus 1 may include a first heat exchanger 77 and a second heat transport line 78. The first heat exchanger 77 is provided along a connection line 74 and is thermally connected to a first reactor 71 via a second heat transport line 78.

The first reactor 71 heats a heat medium (e.g., air) using heat produced in a methanation reaction. The first reactor 71 does not mix the reactant or product of the methanation reaction with the heat medium and transfers heat therebetween. The second heat transport line 78 transports the heat medium heated in the first reactor 71 to the first heat exchanger 77.

The first heat exchanger 77 heats the product of the first reactor 71 with the $H_2O$ concentration adjusted in the water vapor controller 73 using the heat produced in the methanation reaction before the product is supplied to the second reactor 72. The heat produced by the methanation reaction can be effectively used to reduce the specific energy consumption of molten glass. The specific energy consumption is a consumption amount of energy input from outside the system to produce 1 ton of molten glass. The first heat exchanger 77 does not mix the product of the first reactor 71 with the heat medium and transfers heat therebetween.

In addition, the heat produced by the methanation reaction may be used in a different field. For example, the first heat exchanger 77 may be provided along the second supply line 22 to preheat the oxidizing gas (e.g., pure oxygen gas). Heat produced in the methanation reaction may not be used inside the system or may be used outside the system.

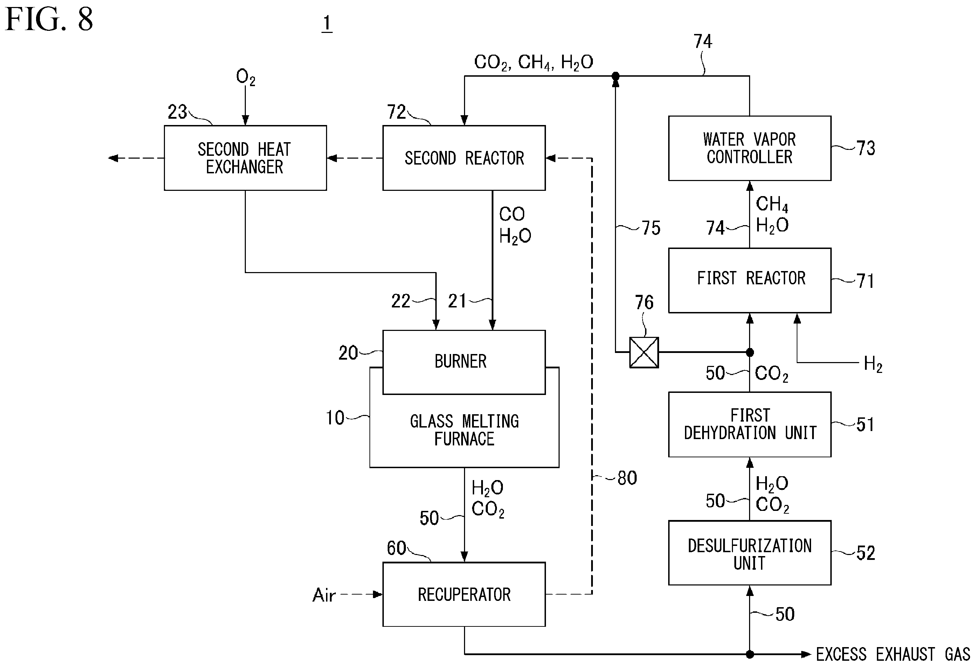

A fifth embodiment of a glass manufacturing apparatus 1 including a recuperator 60 will be described with reference to FIG. 8. Hereinafter, differences from the glass manufacturing apparatus 1 shown in FIG. 4 will be mainly described. As shown in FIG. 8, the glass manufacturing apparatus 1 preferably includes a second heat exchanger 23.

The second heat exchanger 23 is provided along the second supply line 22 and preheats a oxidizing gas (e.g., pure oxygen gas) through heat exchange with a heat medium heated by the recuperator 60. Heat collected from a combustion gas can be effectively used to reduce the specific energy consumption of molten glass. The second heat exchanger 23 does not mix the oxidizing gas with the heat medium (e.g., air) and transfers heat therebetween.

The first heat transport line 80 transports the heat medium from the recuperator 60 to the second heat exchanger 23. Preferably, the first heat transport line 80 transports the heat medium from the recuperator 60 to the second reactor 72 and then transports the heat medium from the second reactor 72 to the second heat exchanger 23. Before the oxidizing gas is heated, the reactant of the second reactor 72 can be heated to easily secure heat necessary to perform a reaction in the second reactor 72.

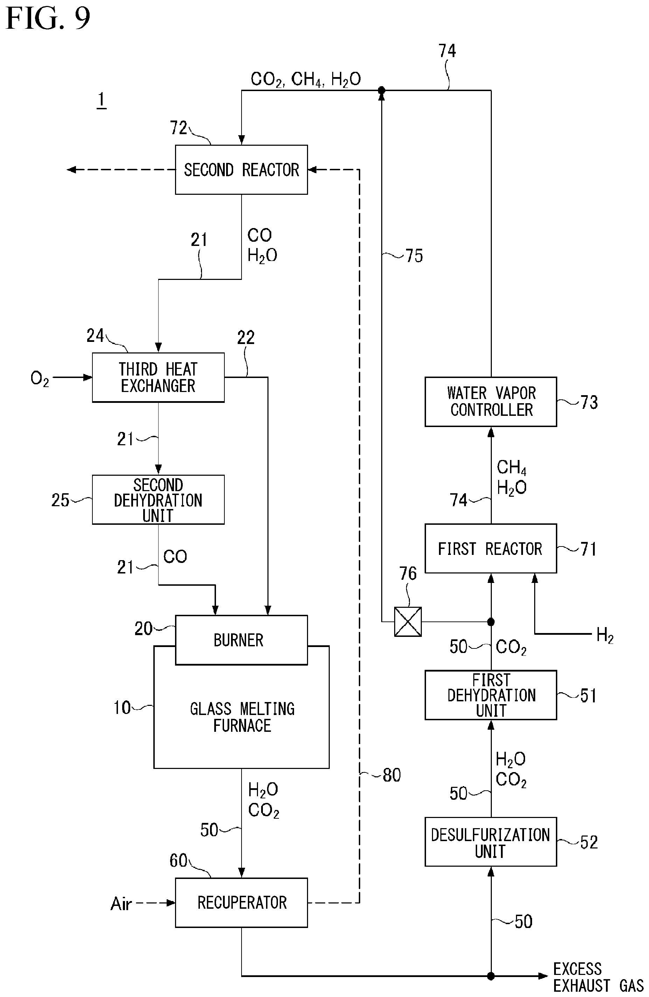

A sixth embodiment of a glass manufacturing apparatus 1 including a recuperator 60 will be described with reference to FIG. 9. Hereinafter, differences from the glass manufacturing apparatus 1 shown in FIG. 4 will be mainly described. As shown in FIG. 9, the glass manufacturing apparatus 1 preferably includes a third heat exchanger 24 and a second dehydration unit 25.

The third heat exchanger 24 transfers heat from the product of the second reactor 72 to the oxidizing gas at a first point of the first supply line 21 overlapping the second supply line 22. The third heat exchanger 24 does not mix the product of the second reactor 72 with the oxidizing gas and transfers heat therebetween. The second dehydration unit 25 removes the $H_2O$ gas from the product of the second reactor 72 at a second point located downstream from the first point of the first supply line 21. Although it is only necessary for the second dehydration unit 25 to remove at least a part of the $H_2O$ gas, substantially all of the $H_2O$ gas is removed in the present embodiment.

The second dehydration unit 25 removes the $H_2O$ gas from the product of the second reactor 72, for example, by cooling the product of the second reactor 72. The $H_2O$ gas not only does not produce heat of combustion but also ineffectively consumes heat of combustion. The second dehydration unit 25 limits the supply of the $H_2O$ gas to the burner 20. It is possible to efficiently heat glass with combustion heat without ineffectively heating $H_2O$ gas not contributing to combustion. Moreover, the $H_2O$ gas concentration in the furnace atmosphere can be reduced.

Before the second dehydration unit 25 cools the product of the second reactor 72, the third heat exchanger 24 transfers heat from the product of the second reactor 72 to the oxidizing gas. Thereby, heat collected from the combustion gas can be used efficiently, thereby reducing the specific energy consumption of the molten glass.

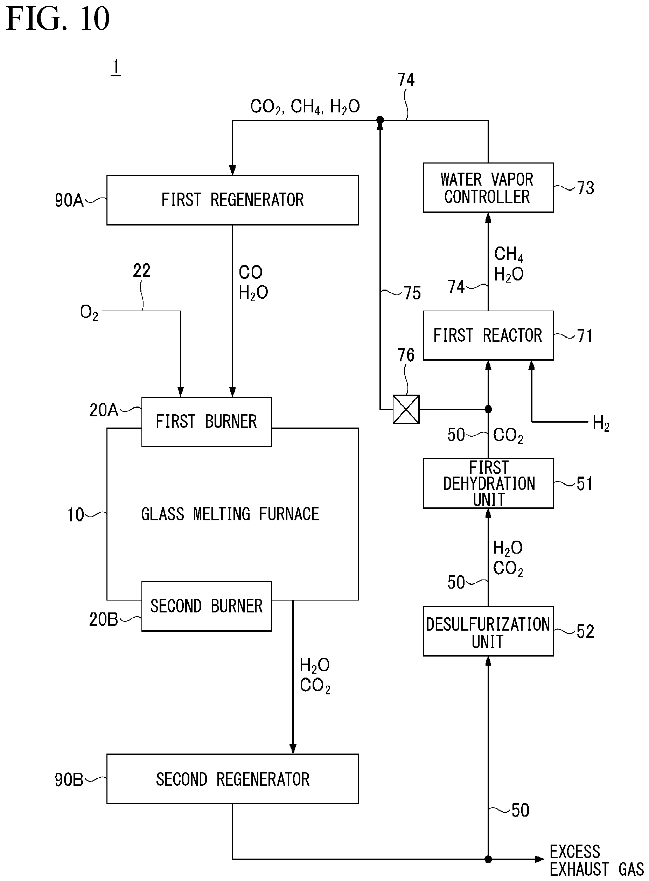

A first embodiment of a glass manufacturing apparatus 1 including a first regenerator 90A and a second regenerator 90B will be described with reference to FIG. 10. The glass manufacturing apparatus 1 includes a glass melting furnace 10, a first burner 20A, a second burner 20B, the first regenerator 90A, the second regenerator 90B, and a first reactor 71. A gas transformer 30 includes the first regenerator 90A, the second regenerator 90B, the first reactor 71, or the like (including an water vapor controller 73 and an additive line 75 to be described below). The first reactor 71 performs a methanation reaction and the first regenerator 90A and the second regenerator 90B perform at least one of DRM and STR reactions. Hereinafter, differences from the glass manufacturing apparatus 1 shown in FIG. 1 will be mainly described.

The first regenerator 90A and the second regenerator 90B are used in combination with the first burner 20A and the second burner 20B. Although the number of first regenerators 90A is one in FIG. 10, the number of first regenerators 90A may be two or more. Likewise, it is only necessary for the number of second regenerators 90B, the number of first burners 20A, and the number of second burners 20B to be one or more.

The glass manufacturing apparatus 1 alternately and iteratively performs a process in which the first burner 20A forms a flame inside the glass melting furnace 10 and the second burner 20B forms a flame inside the glass melting furnace 10. FIG. 10 is a diagram showing a state in which the first burner 20A forms a flame inside the glass melting furnace 10.

The first regenerator 90A collects heat from a combustion gas emitted from the glass melting furnace 10 while the second burner 20B forms a flame inside the glass melting furnace 10. The first regenerator 90A produces CO gas from the product of the first reactor 71 by releasing the heat collected in advance and performing at least one of the DRM and STR reactions while the first burner 20A forms a flame inside the glass melting furnace 10. The first burner 20A burns a flammable gas containing the CO gas produced by the first regenerator 90A and a oxidizing gas to form a flame inside the glass melting furnace 10.

Likewise, the second regenerator 90B collects heat from the combustion gas emitted from the glass melting furnace 10 while the first burner 20A forms a flame inside the glass melting furnace 10. The second regenerator 90B produces the CO gas from the product of the first reactor 71 by releasing the heat collected in advance and performing at least one of the DRM and STR reactions while the second burner 20B forms a flame inside the glass melting furnace 10. The second burner 20B burns the flammable gas containing the CO gas produced by the second regenerator 90B and the oxidizing gas to form a flame inside the glass melting furnace 10.

Unlike the recuperator 60 and the first reactor 71, the first regenerator 90A and the second regenerator 90B direct the flow of combustion gas. The heat of the combustion gas is accumulated in the structures of the first regenerator 90A and the second regenerator 90B.

The first regenerator 90A and the second regenerator 90B produce CO gas from the product of the first reactor 71 by performing at least one of the DRM and STR reactions. When both the DRM and STR reactions occur, $CH_4$ and $H_2O$ gases and $CO_2$ gas are reactants and CO and $H_2$ gases are products (see Eqs. (5) and (6)). The product may include a gas other than the CO gas and the $H_2$ gas, for example, at least one of $H_2O$ gas, $CO_2$ gas, and $CH_4$ gas.

Because the DRM reaction and the STR reaction are endothermic reactions, heat can be efficiently collected from the heat medium and heat collected from the combustion gas can be used efficiently. Moreover, the product of the endothermic reaction (the CO gas) potentially contains more heat than the reactant of the endothermic reaction (the $H_2$ gas). Therefore, the combustion of the CO gas can improve the heat of combustion per mole (see Eqs. (7) and (8)) as compared to the combustion of the $H_2$ gas.

It is only necessary for the reactions occurring in the first regenerator 90A and the second regenerator 90B to be endothermic reactions as a whole. The reactions occurring in the first regenerator 90A and the second regenerator 90B may include reactions other than DRM reactions and STR reactions. Therefore, in the first regenerator 90A and the second regenerator 90B, the reactants and products are not particularly limited.

The glass manufacturing apparatus 1 includes an water vapor controller 73. The water vapor controller 73 is provided along a connection line 74 connecting the first reactor 71 and the first regenerator 90A. The water vapor controller 73 adjusts an $H_2O$ concentration in the product of the first reactor 71 by removing at least a part of the $H_2O$ gas from the

product of the first reactor 71. The water vapor controller 73 is removed, for example, by cooling and liquefying the $H_2O$ gas. The first regenerator 90A produces CO gas from the product of the first reactor 71 in which the $H_2O$ concentration is adjusted by the water vapor controller 73.

In the present embodiment, the water vapor controller 73 removes at least a part of the $H_2O$ gas from the product of the first reactor 71 and then delivers the product of the first reactor 71 to the first regenerator 90A. The $H_2O$ concentration in the product of the first regenerator 90A can be reduced and the $H_2O$ concentration in the furnace atmosphere of the glass melting furnace 10 can be reduced.

A process of removing at least a part of the $H_2O$ gas from the product of the first reactor 71 and then delivering the product of the first reactor 71 to the first regenerator 90A is also effective in performing the overall reaction represented by Eq. (1) or (2). This is evident from the fact that $H_2O$ does not appear as the substance (reactant) on the left side of the general reaction equation, but is present as the substance (product) on the right side of the general reaction equation. By performing the above-described overall reaction and endothermic reaction, the heat collection rate can be improved.

Although the connection line 74 may remove at least a part of the $H_2O$ gas from the product of the first reactor 71 in the water vapor controller 73 and then deliver the product of the first reactor 71 to the first regenerator 90A, the product may be delivered to the second regenerator 90B instead of the first regenerator 90A. In addition, the connection line 74 connecting the first reactor 71 and the first regenerator 90A and the connection line 74 connecting the first reactor 71 and the second regenerator 90B may be different or may be provided separately.

Preferably, the amount of $H_2O$ gas removal in the water vapor controller 73 is set so that C is not produced as a byproduct in the first regenerator 90A (or so that soot is not deposited). Specifically, the water vapor controller 73 preferably removes only a part of the $H_2O$ gas from the product of the first reactor 71 so that the following Inequality (b1) is valid when a reaction temperature in the first regenerator 90A is 900°C or higher, the following Inequality (b2) is valid when the reaction temperature is 800°C or higher and lower than 900°C, and the following Inequality (b3) is valid when the reaction temperature is 700°C or higher and lower than 800°C while the first burner 20A forms the flame inside the glass melting furnace 10.

$$b \geq -a+1 \ldots (b1)$$

$$b \geq -0.68a+1.01 \ldots (b2)$$

$$b \geq -0.1143a^2+0.0286a+1.3029 \ldots (b3)$$

In the above Inequalities (b1), (b2), and (b3), a denotes a molar ratio ($CO_2/CH_4$) of the $CO_2$ gas supplied to the first regenerator 90A to the $CH_4$ gas supplied to the first regenerator 90A and b denotes a molar ratio ($H_2O/CH_4$) of the $H_2O$ gas supplied to the first regenerator 90A to the $CH_4$ gas supplied to the first regenerator 90A.

More preferably, the following Inequality (b4) is valid in addition to any one of the above-described Inequalities (b1), (b2), and (b3).

$$b \leq 2a \ldots (b4)$$

If the above Inequality (b4) is valid, an $H_2O$ gas concentration in the combustion gas of the first burner 20A is 67% or less by volume. It has been confirmed that if the $H_2O$ gas concentration in the combustion gas is 67% or less by volume, there is no problem with the quality of the glass product or corrosion of the furnace material.

In addition to any one of the above Inequalities (b1), (b2), and (b3), the following Inequality (b5) may be valid.

$$b \geq -a+3 \ldots (b5)$$

The first regenerator 90A does not have a metal catalyst. Therefore, the following Inequality (b6) may be valid instead of the above-described Inequality (b5).

$$b < -a+3 \ldots (b6)$$

If the above Inequality (b6) is valid, the amount of $H_2O$ gas removal in the water vapor controller 73 is high and the $H_2O$ gas concentration in the combustion gas is low.

Likewise, preferably, the amount of $H_2O$ gas removal in the water vapor controller 73 is set so that C is not produced as a byproduct in the second regenerator 90B (or so that soot is not deposited). Specifically, the water vapor controller 73 removes only a part of the $H_2O$ gas from the product of the first reactor 71 so that the following Inequality (c1) is valid when a reaction temperature in the second regenerator 90B is 900°C or higher (preferably 1600°C or lower), the following Inequality (c2) is valid when the reaction temperature is 800°C or higher and lower than 900°C, and the following Inequality (c3) is valid when the reaction temperature is 700°C or higher and lower than 800°C while the second burner 20B forms the flame inside the glass melting furnace 10.

$$b \geq -a+1 \ldots (c1)$$

$$b \geq -0.68a+1.01 \ldots (c2)$$

$$b \geq -0.1143a^2+0.0286a+1.3029 \ldots (c3)$$

In the above Inequalities (c1), (c2), and (c3), a denotes a molar ratio ($CO_2/CH_4$) of the $CO_2$ gas supplied to the second regenerator 90B to the $CH_4$ gas supplied to second regenerator 90B and b denotes a molar ratio ($H_2O/CH_4$) of the $H_2O$ gas supplied to the second regenerator 90B to the $CH_4$ gas supplied to the second regenerator 90B.
More preferably, the following Inequality (c4) is valid in addition to any one of the above-described Inequalities (c1), (c2), and (c3).

$$b \leq 2a \ldots (c4)$$

If the above Inequality (c4) is valid, an $H_2O$ gas concentration in the combustion gas of the second burner 20B is 67% or less by volume. It has been confirmed that if the $H_2O$ gas concentration in the combustion gas is 67% or less by volume, there is no problem with the quality of the glass product or corrosion of the furnace material.
In addition to any one of the above Inequalities (c1), (c2), and (c3), the following Inequality (c5) may be valid.

$$b \geq -a+3 \ldots (c5)$$

The second regenerator 90B does not have a metal catalyst. Therefore, the following Inequality (c6) may be valid instead of the above-described Inequality (c5).

$$b < -a+3 \ldots (c6)$$

If the above Inequality (c6) is valid, the amount of $H_2O$ gas removal in the water vapor controller 73 is high and the $H_2O$ gas concentration in the combustion gas is low.
The glass manufacturing apparatus 1 preferably includes an additive line 75. The additive line 75 supplies at least a part of the $CO_2$ gas for use in the DRM reaction to the first regenerator 90A without passing through the first reactor 71. Thereby, it is possible to reduce the molar ratio x in the first reactor 71 and suppress the deposition of soot in the first reactor 71.
The additive line 75 branches from a circulation line 50, which will be discussed below, for example, to bypass the first reactor 71 and join the connection line 74. The additive line 75 may bypass not only the first reactor 71 but also the water vapor controller 73. Cooling of the $CO_2$ gas can be suppressed by the water vapor controller 73. A flow rate controller 76 may be provided along the additive line 75.
Although the additive line 75 joins a connection line 74, the additive line 75 may be connected to the first regenerator 90A without joining the connection line 74. In the former case, the product of the first reactor 71 and the $CO_2$ gas are premixed and supplied to the first regenerator 90A. In the latter case, the product of the first reactor 71 and the $CO_2$ gas are separately supplied to the first regenerator 90A.
Although the additive line 75 supplies at least a part of the $CO_2$ gas for use in the DRM reaction to the first regenerator 90A without passing through the first reactor 71, it may be supplied to the second regenerator 90B instead of the first regenerator 90A. In addition, the additive line 75 for supplying the $CO_2$ gas to the first regenerator 90A and the additive line 75 for supplying the $CO_2$ gas to the second regenerator 90B may be different from each other or may be provided separately.
The glass manufacturing apparatus 1 preferably includes a circulation line 50. The circulation line 50 supplies at least a part of the $CO_2$ gas contained in the combustion gas emitted from the glass melting furnace 10 from the second regenerator 90B to the first reactor 71. At least the part of the $CO_2$ gas emitted from the glass melting furnace 10 can be used as a reactant in the methanation reaction. The $CO_2$ gas can be circulated and an amount of $CO_2$ gas to be emitted can be reduced. At least the part of the $CO_2$ gas emitted from the glass melting furnace 10 can also be used as a reactant in the DRM or STR reaction.

The circulation line 50 may supply at least the part of the $CO_2$ gas contained in the combustion gas emitted from the glass melting furnace 10 from the first regenerator 90A to the first reactor 71. In addition, the circulation line 50 for delivering the $CO_2$ gas from the second regenerator 90B to the first reactor 71 and the circulation line 50 for delivering the $CO_2$ gas from the first regenerator 90A to the first reactor 71 may be different or may be provided separately.

The glass manufacturing apparatus 1 may include a first dehydration unit 51 along the circulation line 50. The first dehydration unit 51 separates the $H_2O$ gas from the $CO_2$ gas by removing the $H_2O$ gas from the combustion gas. It is possible to restrict the circulation of the $H_2O$ gas while permitting the circulation of $CO_2$ gas. The $H_2O$ gas not only does not produce heat of combustion but also ineffectively consumes heat of combustion. If the circulation of the $H_2O$ gas can be restricted, it is possible to efficiently heat glass with combustion heat without ineffectively heating $H_2O$ gas not contributing to combustion. Moreover, if the circulation of the $H_2O$ gas can be restricted, the $H_2O$ gas concentration in the furnace atmosphere can be reduced.

Although it is only necessary for the first dehydration unit 51 to remove at least a part of the $H_2O$ gas, substantially all of the $H_2O$ gas is removed in the present embodiment. In addition, when only a part of the $H_2O$ gas is removed from the first dehydration unit 51 or when there is no first dehydration unit 51 as described below, the gas containing the $H_2O$ gas is supplied to the first reactor 71.

More preferably, a desulfurization unit 52 is provided along the circulation line 50. The desulfurization unit 52 removes a sulfur-containing gas from the combustion gas. The sulfur contained in the sulfur-containing gas is derived from a glass raw material, for example, a fining agent. The supply of the sulfur-containing gas to the first reactor 71 can be restricted by providing the desulfurization unit 52 along the circulation line 50.

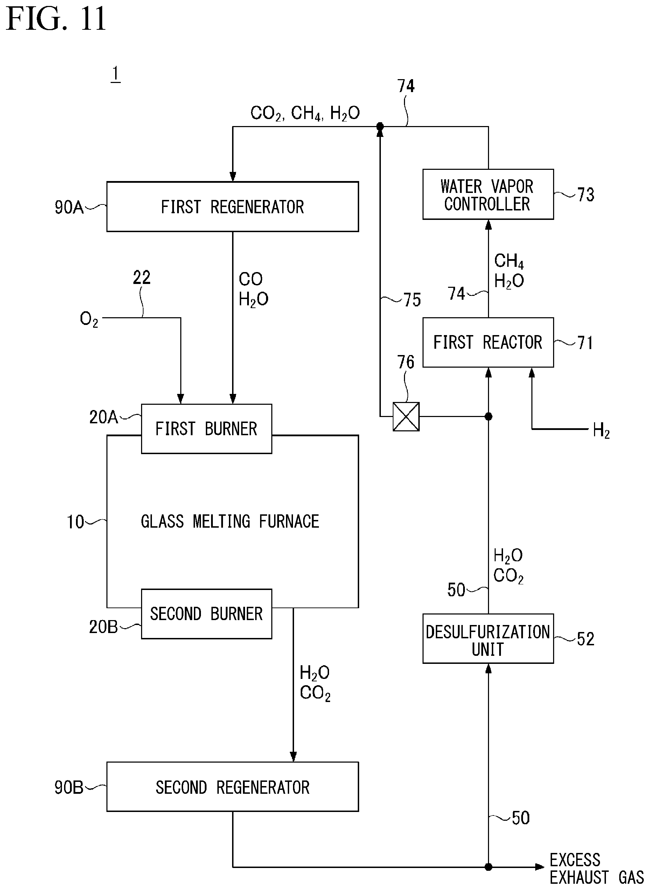

A second embodiment of a glass manufacturing apparatus 1 including a first regenerator 90A and a second regenerator 90B will be described with reference to FIG. 11. Hereinafter, differences from the glass manufacturing apparatus 1 shown in FIG. 10 will be mainly described. As shown in FIG. 11, the glass manufacturing apparatus 1 may not include the first dehydration unit 51 (see FIG. 10). The water vapor controller 73 may also serve as the first dehydration unit 51.

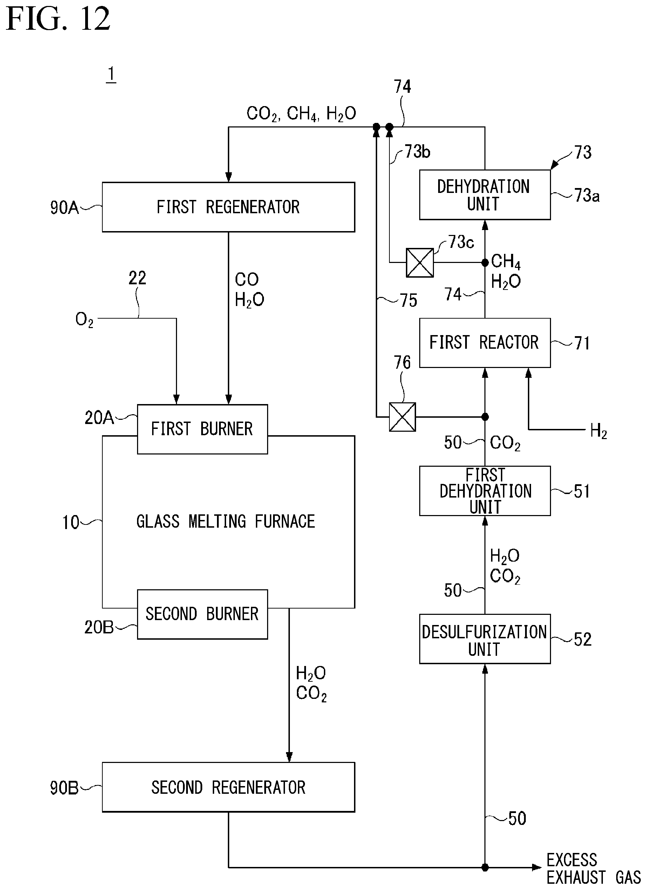

A third embodiment of a glass manufacturing apparatus 1 including a first regenerator 90A and a second regenerator 90B will be described with reference to FIG. 12. Hereinafter, differences from the glass manufacturing apparatus 1 shown in FIG. 10 will be mainly described. As shown in FIG. 12, the water vapor controller 73 may include a dehydration unit 73a for removing a part of the $H_2O$ gas by cooling and liquefying and a bypass line 73b for delivering the remaining part of the $H_2O$ gas from the first reactor 71 to the first regenerator 90A (or the second regenerator 90B).

According to the present embodiment, all unnecessary $H_2O$ gas can be removed in the dehydration unit 73a while the $H_2O$ gas for use in the STR reaction remains. Moreover, the $H_2O$ gas for use in the STR reaction can also be delivered from the first reactor 71 to the first regenerator 90A (or the second regenerator 90B) without cooling in the dehydration unit 73a. The bypass line 73b bypasses the dehydration unit 73a. A flow rate controller 73c may be provided along the bypass line 73b.

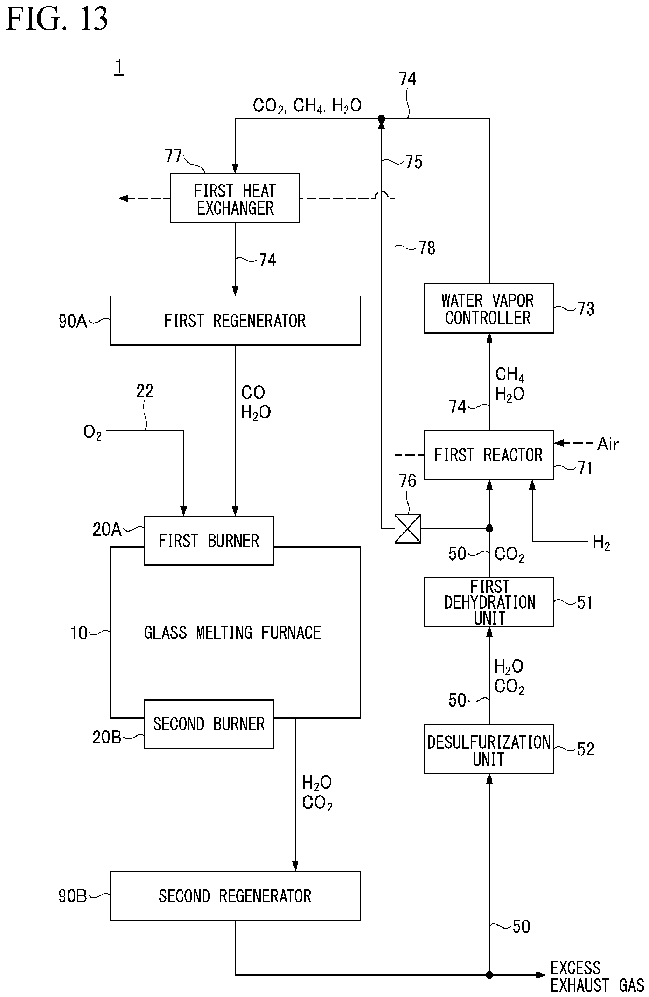

A fourth embodiment of a glass manufacturing apparatus 1 including a first regenerator 90A and a second regenerator 90B will be described with reference to FIG. 13. Hereinafter, differences from the glass manufacturing apparatus 1 shown in FIG. 10 will be mainly described. As shown in FIG. 13, the glass manufacturing apparatus 1 may include a first heat exchanger 77 and a second heat transport line 78. The first heat exchanger 77 is provided along a connection line 74 and is thermally connected to a first reactor 71 via a second heat transport line 78.

The first reactor 71 heats a heat medium (e.g., air) using heat produced in a methanation reaction. The first reactor 71 does not mix the reactant or product of the methanation reaction with the heat medium and transfers heat therebetween. The second heat transport line 78 transports the heat medium heated in the first reactor 71 to the first heat exchanger 77.

The first heat exchanger 77 heats the product of the first reactor 71 with the $H_2O$ concentration adjusted in the water vapor controller 73 using the heat produced in the methanation reaction before the product is supplied to the first regenerator 90A (or the second regenerator 90B). The heat produced by the methanation reaction can be effectively used to reduce the specific energy consumption of molten glass. The first heat exchanger 77 does not mix the product of the first reactor 71 with the heat medium and transfers heat therebetween.

In addition, the heat produced by the methanation reaction may be used in a different field. For example, the first heat exchanger 77 may be provided along the second supply line 22 to preheat the oxidizing gas (e.g., pure oxygen gas). Heat produced in the methanation reaction may not be used inside the system or may be used outside the system.

The following appendixes are disclosed with respect to the above-described embodiments and the like.

[Appendix 1] A glass manufacturing apparatus including:

a recuperator configured to heat a heat medium through heat exchange with a combustion gas emitted from a glass melting furnace;

a first reactor configured to produce $CH_4$ gas and $H_2O$ gas from $CO_2$ gas and $H_2$ gas by performing a methanation reaction;

an water vapor controller configured to adjust an $H_2O$ concentration in a product of the first reactor by removing at least a part of the $H_2O$ gas from the product of the first reactor;

a second reactor configured to produce CO gas and $H_2$ gas from the product of the first reactor with the $H_2O$ concentration adjusted in the water vapor controller by performing at least one of a dry reforming reaction and a steam reforming reaction through heat exchange with the heat medium heated by the recuperator; and

a burner configured to form a flame in the glass melting furnace by burning a oxidizing gas and a flammable gas containing the CO gas and the $H_2$ gas produced by the second reactor.

[Appendix 2] The glass manufacturing apparatus according to appendix 1,

wherein the water vapor controller removes only a part of the $H_2O$ gas from the product of the first reactor so that the following Inequality (a1) is valid when a reaction temperature in the second reactor is 900°C or higher, the following Inequality (a2) is valid when the reaction temperature is 800°C or higher and lower than 900°C, and the following Inequality (a3) is valid when the reaction temperature is 700°C or higher and lower than 800°C, and

wherein, in the following Inequalities (a1), (a2), and (a3), a denotes a molar ratio ($CO_2/CH_4$) of the $CO_2$ gas supplied to the second reactor to the $CH_4$ gas supplied to the second reactor and b denotes a molar ratio ($H_2O/CH_4$) of the $H_2O$ gas supplied to the second reactor to the $CH_4$ gas supplied to the second reactor.

$$b \geq -a+1 \ \ldots (a1)$$

$$b \geq -0.68a+1.01 \ \ldots (a2)$$

$$b \geq -0.1143a^2+0.0286a+1.3029 \ \ldots (a3)$$

[Appendix 3] The glass manufacturing apparatus according to appendix 2, wherein the water vapor controller removes only a part of the $H_2O$ gas from the product of the first reactor so that the following Inequality (a4) is valid in addition to any one of the above Inequalities (a1), (a2), and (a3).

$$b \leq 2a \ \ldots (a4)$$

[Appendix 4] The glass manufacturing apparatus according to any one of appendixes 1 to 3, including an additive line along which at least a part of the $CO_2$ gas for use in the dry reforming reaction is supplied to the second reactor without passing through the first reactor.

[Appendix 5] The glass manufacturing apparatus according to any one of appendixes 1 to 4, including a first heat exchanger configured to heat the product of the first reactor with the $H_2O$ concentration adjusted in the water vapor controller using heat produced by the methanation reaction before the product of the first reactor is supplied to the second reactor.

[Appendix 6] The glass manufacturing apparatus according to any one of appendixes 1 to 5, wherein the oxidizing gas is pure oxygen gas or oxygen-enriched air.

[Appendix 7] The glass manufacturing apparatus according to any one of appendixes 1 to 6, including a circulation line along which at least a part of the $CO_2$ gas contained in a combustion gas burned by the burner is supplied from the glass melting furnace to the first reactor.

[Appendix 8] The glass manufacturing apparatus according to appendix 7, including a first dehydration unit configured to remove the $H_2O$ gas from the combustion gas along the circulation line.

[Appendix 9] The glass manufacturing apparatus according to any one of appendixes 1 to 8, including a second heat exchanger configured to preheat the oxidizing gas through the heat exchange with the heat medium heated by the recuperator.

[Appendix 10] The glass manufacturing apparatus according to any one of appendixes 1 to 9, including:

a first supply line along which a product of the second reactor is supplied to the burner;

a second supply line along which the oxidizing gas is supplied to the burner;

a third heat exchanger configured to transfer heat from the product of the second reactor to the oxidizing gas at a first point of the first supply line overlapping the second supply line; and

a second dehydration unit configured to remove the $H_2O$ gas from the product of the second reactor at a second point located downstream from the first point of the first supply line.

[Appendix 11] The glass manufacturing apparatus according to any one of appendixes 1 to 10, wherein the second reactor has a metal catalyst that promotes at least one of the dry reforming reaction and the steam reforming reaction.

[Appendix 12] A glass manufacturing apparatus for alternately and iteratively performing a process in which a first burner forms a flame inside a glass melting furnace and a second burner forms a flame inside the glass melting furnace, the glass manufacturing apparatus including:

a first reactor configured to produce $CH_4$ gas and $H_2O$ gas from $CO_2$ gas and $H_2$ gas by performing a methanation reaction;

an water vapor controller configured to adjust an $H_2O$ concentration in a product of the first reactor by removing at least a part of the $H_2O$ gas from the product of the first reactor;

a first regenerator configured to produce CO gas and the $H_2$ gas from the product of the first reactor with the $H_2O$ concentration adjusted in the water vapor controller by collecting heat from a combustion gas emitted from the glass melting furnace while the second burner forms the flame inside the glass melting furnace, releasing the heat while the first burner forms the flame inside the glass melting furnace, and performing at least one of a dry reforming reaction and a steam reforming reaction;

the first burner configured to form the flame inside the glass melting furnace by burning a flammable gas containing the CO gas and the $H_2$ gas produced in the first regenerator and a oxidizing gas;

a second regenerator configured to produce the CO gas and the $H_2$ gas from the product of the first reactor with the $H_2O$ concentration adjusted in the water vapor controller by collecting heat from a combustion gas emitted from the glass melting furnace while the first burner forms the flame inside the glass melting furnace, releasing the heat while the second burner forms the flame inside the glass melting furnace, and performing at least one of the dry reforming reaction and the steam reforming reaction; and

the second burner configured to form the flame inside the glass melting furnace by burning the flammable gas containing the CO gas and the $H_2$ gas produced in the second regenerator and the oxidizing gas.

[Appendix 13] The glass manufacturing apparatus according to appendix 12,

wherein the water vapor controller removes only a part of the $H_2O$ gas from the product of the first reactor so that the following Inequality (b1) is valid when a reaction temperature in the first regenerator is 900°C or higher, the following Inequality (b2) is valid when the reaction temperature is 800°C or higher and lower than 900°C, and the following Inequality (b3) is valid when the reaction temperature is 700°C or higher and lower than 800°C while the first burner forms the flame inside the glass melting furnace, and

wherein, in the following Inequalities (b1), (b2), and (b3), a denotes a molar ratio ($CO_2/CH_4$) of the $CO_2$ gas supplied to the first regenerator to the $CH_4$ gas supplied to the first regenerator and b denotes a molar ratio ($H_2O/CH_4$) of the $H_2O$ gas supplied to the first regenerator to the $CH_4$ gas supplied to the first regenerator.

$$b \geq -a+1 \ \ldots (b1)$$

$$b \geq -0.68a+1.01 \ \ldots (b2)$$

$$b \geq -0.1143a^2+0.0286a+1.3029 \ \ldots (b3)$$

[Appendix 14] The glass manufacturing apparatus according to appendix 13, wherein the water vapor controller removes only a part of the $H_2O$ gas from the product of the first reactor so that the following Inequality (b4) is valid in addition to any one of the above Inequalities (b1), (b2), and (b3).

$$b \leq 2a \ \ldots (b4)$$

[Appendix 15] The glass manufacturing apparatus according to any one of appendixes 12 to 14, including an additive line along which at least a part of the $CO_2$ gas for use in the dry reforming reaction is supplied to the first regenerator or the second regenerator without passing through the first reactor.

[Appendix 16] The glass manufacturing apparatus according to any one of appendixes 12 to 15, including a first heat exchanger configured to heat the product of the first reactor with the $H_2O$ concentration adjusted in the water vapor controller using heat produced by the methanation reaction before the product of the first reactor is supplied to the first regenerator or the second regenerator.

[Appendix 17] The glass manufacturing apparatus according to any one of appendixes 12 to 16, wherein the oxidizing gas is pure oxygen gas or oxygen-enriched air.

[Appendix 18] The glass manufacturing apparatus according to any one of appendixes 12 to 17, including a circulation line along which at least a part of the $CO_2$ gas contained in a combustion gas emitted from the glass melting furnace is supplied from the second regenerator or the first regenerator to the first reactor.

[Appendix 19] The glass manufacturing apparatus according to appendix 18, including a dehydration unit configured to remove the $H_2O$ gas from the combustion gas along the circulation line.

[Appendix 20] A glass manufacturing method including manufacturing molten glass using the glass manufacturing apparatus according to any one of appendixes 1 to 19.

Although the glass manufacturing apparatus and the glass manufacturing method according to the present disclosure have been described above, the present disclosure is not limited to the above-described embodiments and the like. Various changes, modifications, substitutions, additions, deletions, and combinations can be made without departing from the scope described in the claims. These are, of course, also within the technical scope of the present disclosure.

Priority is claimed on Japanese Patent Application No. 2022-188270, filed November 25, 2022, the content of which is incorporated herein by reference.

REFERENCE SIGNS LIST

    1 Glass manufacturing apparatus
    10 Glass melting furnace
    20 Burner
    60 Recuperator
    71 First reactor
    72 Second reactor
    73 Water vapor controller

**Claims**

1.  A glass manufacturing apparatus comprising:

    a recuperator configured to heat a heat medium through heat exchange with a combustion gas emitted from a glass melting furnace;
    a first reactor configured to produce $CH_4$ gas and $H_2O$ gas from $CO_2$ gas and $H_2$ gas by performing a methanation reaction;
    an water vapor controller configured to adjust an $H_2O$ concentration in a product of the first reactor by removing at least a part of the $H_2O$ gas from the product of the first reactor;
    a second reactor configured to produce CO gas and $H_2$ gas from the product of the first reactor with the $H_2O$ concentration adjusted in the water vapor controller by performing at least one of a dry reforming reaction and a steam reforming reaction through heat exchange with the heat medium heated by the recuperator; and
    a burner configured to form a flame in the glass melting furnace by burning a oxidizing gas and a flammable gas containing the CO gas and the $H_2$ gas produced by the second reactor.

2.  The glass manufacturing apparatus according to claim 1,

    wherein the water vapor controller removes only a part of the $H_2O$ gas from the product of the first reactor so that the following Inequality (a1) is valid when a reaction temperature in the second reactor is 900°C or higher, the following Inequality (a2) is valid when the reaction temperature is 800°C or higher and lower than 900°C, and the following Inequality (a3) is valid when the reaction temperature is 700°C or higher and lower than 800°C, and wherein, in the following Inequalities (a1), (a2), and (a3), a denotes a molar ratio ($CO_2/CH_4$) of the $CO_2$ gas supplied to the second reactor to the $CH_4$ gas supplied to the second reactor and b denotes a molar ratio ($H_2O/CH_4$) of the $H_2O$ gas supplied to the second reactor to the $CH_4$ gas supplied to the second reactor.

$$b \geq -a+1 \;\ldots(a1)$$

$$b \geq -0.68a+1.01 \;\ldots(a2)$$

$$b \geq -0.1143a^2+0.0286a+1.3029 \;\ldots(a3)$$

3. The glass manufacturing apparatus according to claim 2, wherein the water vapor controller removes only a part of the $H_2O$ gas from the product of the first reactor so that the following Inequality (a4) is valid in addition to any one of the above Inequalities (a1), (a2), and (a3).

$$b \leq 2a \;\ldots(a4)$$

4. The glass manufacturing apparatus according to any one of claims 1 to 3, comprising an additive line along which at least a part of the $CO_2$ gas for use in the dry reforming reaction is supplied to the second reactor without passing through the first reactor.

5. The glass manufacturing apparatus according to any one of claims 1 to 3, comprising a first heat exchanger configured to heat the product of the first reactor with the $H_2O$ concentration adjusted in the water vapor controller using heat produced by the methanation reaction before the product of the first reactor is supplied to the second reactor.

6. The glass manufacturing apparatus according to any one of claims 1 to 3, wherein the oxidizing gas is pure oxygen gas or oxygen-enriched air.

7. The glass manufacturing apparatus according to any one of claims 1 to 3, comprising a circulation line along which at least a part of the $CO_2$ gas contained in a combustion gas burned by the burner is supplied from the glass melting furnace to the first reactor.

8. The glass manufacturing apparatus according to claim 7, comprising a first dehydration unit configured to remove the $H_2O$ gas from the combustion gas along the circulation line.

9. The glass manufacturing apparatus according to any one of claims 1 to 3, comprising a second heat exchanger configured to preheat the oxidizing gas through the heat exchange with the heat medium heated by the recuperator.

10. The glass manufacturing apparatus according to any one of claims 1 to 3, comprising:

a first supply line along which a product of the second reactor is supplied to the burner;
a second supply line along which the oxidizing gas is supplied to the burner;
a third heat exchanger configured to transfer heat from the product of the second reactor to the oxidizing gas at a first point of the first supply line overlapping the second supply line; and
a second dehydration unit configured to remove the $H_2O$ gas from the product of the second reactor at a second point located downstream from the first point of the first supply line.

11. The glass manufacturing apparatus according to any one of claims 1 to 3, wherein the second reactor has a metal catalyst that promotes at least one of the dry reforming reaction and the steam reforming reaction.

12. A glass manufacturing apparatus for alternately and iteratively performing a process in which a first burner forms a flame inside a glass melting furnace and a second burner forms a flame inside the glass melting furnace, the glass manufacturing apparatus comprising:

a first reactor configured to produce $CH_4$ gas and $H_2O$ gas from $CO_2$ gas and $H_2$ gas by performing a methanation reaction;
an water vapor controller configured to adjust an $H_2O$ concentration in a product of the first reactor by removing at least a part of the $H_2O$ gas from the product of the first reactor;
a first regenerator configured to produce CO gas and the $H_2$ gas from the product of the first reactor with the $H_2O$ concentration adjusted in the water vapor controller by collecting heat from a combustion gas emitted from the glass melting furnace while the second burner forms the flame inside the glass melting furnace, releasing the heat while the first burner forms the flame inside the glass melting furnace, and performing at least one of a dry reforming reaction and a steam reforming reaction;

the first burner configured to form the flame inside the glass melting furnace by burning a flammable gas containing the CO gas and the $H_2$ gas produced in the first regenerator and a oxidizing gas;

a second regenerator configured to produce the CO gas and the $H_2$ gas from the product of the first reactor with the $H_2O$ concentration adjusted in the water vapor controller by collecting heat from a combustion gas emitted from the glass melting furnace while the first burner forms the flame inside the glass melting furnace, releasing the heat while the second burner forms the flame inside the glass melting furnace, and performing at least one of the dry reforming reaction and the steam reforming reaction; and

the second burner configured to form the flame inside the glass melting furnace by burning the flammable gas containing the CO gas and the $H_2$ gas produced in the second regenerator and the oxidizing gas.

13. The glass manufacturing apparatus according to claim 12,

wherein the water vapor controller removes only a part of the $H_2O$ gas from the product of the first reactor so that the following Inequality (b1) is valid when a reaction temperature in the first regenerator is 900°C or higher, the following Inequality (b2) is valid when the reaction temperature is 800°C or higher and lower than 900°C, and the following Inequality (b3) is valid when the reaction temperature is 700°C or higher and lower than 800°C while the first burner forms the flame inside the glass melting furnace, and

wherein, in the following Inequalities (b1), (b2), and (b3), a denotes a molar ratio ($CO_2/CH_4$) of the $CO_2$ gas supplied to the first regenerator to the $CH_4$ gas supplied to the first regenerator and b denotes a molar ratio ($H_2O/CH_4$) of the $H_2O$ gas supplied to the first regenerator to the $CH_4$ gas supplied to the first regenerator.

$$b \geq -a+1 \ ...(b1)$$

$$b \geq -0.68a+1.01 \ ...(b2)$$

$$b \geq -0.1143a^2+0.0286a+1.3029 \ ...(b3)$$

14. The glass manufacturing apparatus according to claim 13, wherein the water vapor controller removes only a part of the $H_2O$ gas from the product of the first reactor so that the following Inequality (b4) is valid in addition to any one of the above Inequalities (b1), (b2), and (b3).

$$b \leq 2a \ ...(b4)$$

15. The glass manufacturing apparatus according to any one of claims 12 to 14, comprising an additive line along which at least a part of the $CO_2$ gas for use in the dry reforming reaction is supplied to the first regenerator or the second regenerator without passing through the first reactor.

16. The glass manufacturing apparatus according to any one of claims 12 to 14, comprising a first heat exchanger configured to heat the product of the first reactor with the $H_2O$ concentration adjusted in the water vapor controller using heat produced by the methanation reaction before the product of the first reactor is supplied to the first regenerator or the second regenerator.

17. The glass manufacturing apparatus according to any one of claims 12 to 14, wherein the oxidizing gas is pure oxygen gas or oxygen-enriched air.

18. The glass manufacturing apparatus according to any one of claims 12 to 14, comprising a circulation line along which at least a part of the $CO_2$ gas contained in a combustion gas emitted from the glass melting furnace is supplied from the second regenerator or the first regenerator to the first reactor.

19. The glass manufacturing apparatus according to claim 18, comprising a dehydration unit configured to remove the $H_2O$ gas from the combustion gas along the circulation line.

**20.** A glass manufacturing method comprising manufacturing molten glass using the glass manufacturing apparatus according to any one of claims 1 to 3 and 12 to 14.

# FIG. 1

<u>1</u>

FIG. 2

# FIG. 3

| | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 | EXAMPLE 12 | EXAMPLE 13 | EXAMPLE 14 |
|---|---|---|---|---|---|---|---|---|---|---|---|---|---|---|
| FLAMMABLE GAS | $CH_4$ | $CH_4$ | $H_2$ | $H_2$ | $H_2$ | $H_2$ | $H_2$ | $H_2$ | $H_2$ | $H_2$ | $H_2$ | $H_2$ | $H_2$ | $H_2$ |
| PRESENCE/ABSENCE OF TRANSFORMATION OF FLAMMABLE GAS | PRESENCE | PRESENCE | PRESENCE | PRESENCE | ABSENCE | ABSENCE | ABSENCE | ABSENCE | ABSENCE | ABSENCE | ABSENCE | ABSENCE | ABSENCE | ABSENCE |
| MOLAR RATIO x | — | — | — | — | 0.00 | 0.25 | 0.50 | 0.55 | 0.75 | 1.00 | 2.00 | 3.00 | 4.00 | 5.00 |
| OXIDIZING GAS | Air | $O_2$ | Air | $O_2$ | $O_2$ | $O_2$ | $O_2$ | $O_2$ | $O_2$ | $O_2$ | $O_2$ | $O_2$ | $O_2$ | $O_2$ |
| $H_2O$ GAS CONCENTRATION [% BY VOLUME] IN FLAMMABLE GAS | 19 | 67 | 35 | 100 | 100 | 80 | 67 | 65 | 57 | 50 | 33 | 25 | 20 | 17 |
| $H_2O$ GAS CONCENTRATION [% BY VOLUME] IN FURNACE ATMOSPHERE | 20 | 61 | 35 | 88 | 88 | 73 | 62 | 61 | 55 | 49 | 34 | 26 | 21 | 18 |

EP 4 624 431 A1

# FIG. 4

<u>1</u>

# FIG. 5

<u>1</u>

## FIG. 6

# FIG. 7

# FIG. 8

# FIG. 9

# FIG. 10

# FIG. 11

# FIG. 12

## FIG. 13

FIG. 14

Legend:
- ○ 700°C OR HIGHER AND LOWER THAN 800°C
- □ 800°C OR HIGHER AND LOWER THAN 900°C
- ◇ 900°C OR HIGHER
- – – – PRESENCE OF CATALYST
- ●—— H2O GAS CONCENTRATION OF 67% BY VOLUME

$b = 2a$

$b = -a + 3$

$b = -0.1143a^2 + 0.0286a + 1.3029$

$b = -0.68a + 1.01$

$b = -a + 1$

P1

MOLAR RATIO $a$ ($CO_2/CH_4$)

MOLAR RATIO $b$ ($H_2O/CH_4$)

# FIG. 15

a=0.5, b=0.5 ($CH_4$+0.5$CO_2$+0.5$H_2O$)

FIG. 16

## INTERNATIONAL SEARCH REPORT

| International application No. |
| --- |
| **PCT/JP2023/040616** |

### A. CLASSIFICATION OF SUBJECT MATTER

*C03B 5/237*(2006.01)i; *F23K 5/00*(2006.01)i
FI:  C03B5/237; F23K5/00 303

According to International Patent Classification (IPC) or to both national classification and IPC

### B. FIELDS SEARCHED

Minimum documentation searched (classification system followed by classification symbols)

C03B5/00-5/44; F23K5/00; F27D17/00; C07C1/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 4-231328 A (AIR PROD AND CHEM INC) 20 August 1992 (1992-08-20)<br>claims, paragraphs [0011], [0032]-[0038], fig. 1 | 1-9, 11, 20 |
| A | | 10, 12-19 |
| Y | JP 2022-32117 A (TOYOTA CENTRAL RES & DEV) 25 February 2022 (2022-02-25)<br>paragraphs [0002], [0028], fig. 1 | 1-9, 11-14, 16-20 |
| Y | JP 2011-256159 A (URYU, Hiroo) 22 December 2011 (2011-12-22)<br>claims 1, 10, paragraphs [0023]-[0025] | 1-9, 11-14, 16-20 |
| Y | WO 2011/152024 A1 (NIPPON SHEET GLASS CO LTD) 08 December 2011 (2011-12-08)<br>claims, paragraphs [0026]-[0030], [0037]-[0039], [0049]-[0070], fig. 1, 3 | 12-14, 16-20 |
| A | | 1-11, 15 |
| A | JP 2020-508951 A (L'AIR LIQUIDE SOCIETE ANONYME POUR L'ETUDE ET L'EXPLOITATION DES PROCEDES GEORGES CLAUDE) 26 March 2020 (2020-03-26) | 1-20 |

☐ Further documents are listed in the continuation of Box C.     ☑ See patent family annex.

| | |
| --- | --- |
| *     Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **11 January 2024** | **23 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/040616**

| Patent document cited in search report | | | Publication date (day/month/year) | Patent family member(s) | | | Publication date (day/month/year) |
|---|---|---|---|---|---|---|---|
| JP | 4-231328 | A | 20 August 1992 | US | 5057133 | A | |
| | | | | claims, column 5, line 30 to column 7, line 56, fig. 1 | | | |
| | | | | EP | 464603 | A2 | |
| | | | | KR | 10-1992-0002478 | A | |
| | | | | CN | 1059323 | A | |
| JP | 2022-32117 | A | 25 February 2022 | (Family: none) | | | |
| JP | 2011-256159 | A | 22 December 2011 | WO | 2011/142200 | A1 | |
| WO | 2011/152024 | A1 | 08 December 2011 | (Family: none) | | | |
| JP | 2020-508951 | A | 26 March 2020 | US | 2018/0215641 | A1 | |
| | | | | WO | 2018/140684 | A1 | |
| | | | | CN | 110366660 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3705713 B
- JP 6980795 B
- JP 6144622 B
- JP 2022188270 A